# EUROPEAN PATENT SPECIFICATION

(11) **EP 3 070 305 B1**
(45) Date of publication and mention of the grant of the patent: **11.07.2018**
(21) Application number: 14862828.2
(22) Date of filing: 25.03.2014
(51) Int. Cl.: F02C 7/18, F01D 25/12, F01K 23/02, F01K 23/10, F01K 25/10

(54) **GAS TURBINE COOLING SYSTEM, GAS TURBINE PLANT EQUIPPED WITH SAME, AND METHOD FOR COOLING HIGH-TEMPERATURE SECTION OF GAS TURBINE**
KÜHLSYSTEM FÜR GASTURBINEN, GASTURBINENANLAGE DAMIT UND VERFAHREN ZUR KÜHLUNG EINES HOCHTEMPERATURABSCHNITTS EINER GASTURBINE
SYSTÈME DE REFROIDISSEMENT DE TURBINE À GAZ, INSTALLATION DE TURBINE À GAZ ÉQUIPÉE DE CELUI-CI ET PROCÉDÉ DE REFROIDISSEMENT DE SECTION À TEMPÉRATURE ÉLEVÉE DE TURBINE À GAZ

(30) Priority: 14.11.2013 JP 2013236059
(43) Date of publication of application: 21.09.2016
(73) Proprietor: Mitsubishi Hitachi Power Systems, Ltd., Yokohama-shi, Kanagawa 220-8401 (JP)
(72) Inventor: TOMITA, Yasuoki, Tokyo 108-8215 (JP); AKITA, Eiji, Tokyo 108-8215 (JP); SAKAGAMI, Naoki, Tokyo 108-8215 (JP); NAGAKAWA, Takaaki, Tokyo 108-8215 (JP); ASAKUNO, Jiro, Tokyo 108-8215 (JP); TAKAMATSU, Masaru, Tokyo 108-8215 (JP); AKAZAWA, Shin, Yokohama-shi Kanagawa 220-8401 (JP); TAKASHIMA, Yasuhiro, Yokohama-shi Kanagawa 220-8401 (JP)
(74) Representative: Henkel, Breuer & Partner
(86) International application number: PCT/JP2014/058233
(87) International publication number: WO 2015/072159

(56) References cited:
- EP-A1- 0 584 958
- JP-A- H05 248 260
- JP-A- H11 117 712
- JP-A- 2012 026 441
- JP-A- 2013 040 619
- JP-B2- 4 881 065
- US-A1- 2009 293 496

## Description

### [Technical Field]

The present invention relates to a gas turbine cooling system configured to cool a high temperature section in contact with a combusted gas in a gas turbine, a gas turbine plant including the same, and a method of cooling a high temperature section of a gas turbine.

### [Background Art]

A gas turbine includes a compressor configured to compress outside air to generate compressed air, a plurality of combustors configured to combust fuel in the compressed air to generate a combusted gas, and a turbine driven by the combusted gas. In the gas turbine, since a heat chamber or a tail pipe of the combustor, blades or vanes of the turbine, and the like, are exposed to the combusted gas, these high temperature sections should be protected from heat of the combusted gas by cooling the high temperature sections.

As a gas turbine plant including the cooling system configured to cool the high temperature sections of the gas turbine, for example, a plant disclosed in the following JP 3150567 A is provided.

The gas turbine plant disclosed in JP 3150567 A includes a cooling air line configured to introduce the compressed air extracted from the compressor into the high temperature sections, and an air-cooling cooler installed at the cooling air line. The air-cooling cooler has a radiator through which the compressed air passes, and a fan configured to blow the outside air against the radiator.

US 2009/0293496 A1 discloses a ground based turbine system for generating electricity including a gas turbine and a gas turbine cooling system configured to cool a high temperature section in contact with a combustion gas in the gas turbine using compressed air extracted from a compressor of the gas turbine. The gas turbine cooling system includes a vapor cycle in which a cooling medium is circulated, the vapor cycle comprising an evaporator exchanging heat with the compressed air such that the compressed air is cooled and that the cooling medium is evaporated, a steam turbine and a condenser. The evaporated cooling medium is supplied to the steam turbine in order to drive the turbine. Subsequently, the cooling medium is supplied to the condenser in order to be condensed and is then again supplied to the evaporator. The turbine is configured to drive a generator to generate electricity. The compressed air cooled by the evaporator is then supplied to the gas turbine to cool members thereof that are in contact with the combustion gas.

### [Summary of Invention]

### [Technical Problem]

In the gas turbine plant disclosed in the above-mentioned JP 3150567 A, as the compressed air extracted from the compressor exchanges heat with the outside air, while the compressed air is cooled, fundamentally, it is hard to say that the outside air that is not required to be heated is heated, and thus heat of the compressed air is effectively used.

Here, the present invention is directed to provide a gas turbine cooling system, a gas turbine plant including the same, and a method of cooling a high temperature section of a gas turbine that are capable of effectively using heat of compressed air extracted from the compressor while cooling high temperature sections in a gas turbine.

### [Solution to Problem]

In order to accomplish the above-mentioned objects, the present invention provides a gas turbine cooling system as defined by claim 1 or claim 5 and a method of cooling a high temperature section of a gas turbine as defined by claim 14 or claim 15. A gas turbine cooling system according to a first aspect of the present invention as defined by claim 1 is configured to cool a high temperature section in contact with a combusted gas in a gas turbine using compressed air extracted from a compressor of the gas turbine, the gas turbine cooling system includes an organic Rankine cycle configured to repeatedly circulate a cycle medium through condensation and evaporation in a cycle including the turbine and drive the turbine using the evaporated cycle medium; an air-extraction line configured to extract the compressed air from the compressor; a cooling apparatus configured to cool the compressed air while heating and evaporating the cycle medium condensed in the organic Rankine cycle using heat of the compressed air passing through the air-extraction line; and a cooling air line configured to guide the compressed air cooled by the cooling apparatus to the high temperature section.

In the gas turbine cooling system, the high temperature section of the gas turbine can be cooled by the compressed air cooled in the cooling apparatus. Moreover, in the gas turbine cooling system, since the cycle medium is heated and evaporated using heat of the compressed air and the turbine of the organic Rankine cycle is driven by the evaporated cycle medium, heat of the compressed air can be effectively used.

Here, in the gas turbine cooling system according to the first aspect, the cooling apparatus has an indirect type heat exchange apparatus configured to exchange heat between the compressed air passing through the air-extraction line and the cycle medium condensed in the organic Rankine cycle via an intermediate medium.

In the gas turbine cooling system having the indirect type heat exchange apparatus, the indirect type heat exchange apparatus has a first heat exchanger configured to exchange heat between the compressed air passing through the air-extraction line and the intermediate medium to heat the intermediate medium while cooling the compressed air; and a second heat exchanger configured to exchange heat between the intermediate medium heated by the first heat exchanger and the cycle medium condensed in the organic Rankine cycle to cool the intermediate medium and return the intermediate medium to the first heat exchanger while heating and evaporating the cycle medium.

In the gas turbine cooling system having the first heat exchanger and the second heat exchanger, the cooling apparatus has a preliminary cooler configured to cool the intermediate medium; and an intermediate medium switching device configured to switch between a first state in which the intermediate medium heated by the first heat exchanger is guided to the second heat exchanger and a second state in which the intermediate medium heated by the first heat exchanger is guided to the preliminary cooler.

In the gas turbine cooling system, even when the organic Rankine cycle is stopped, since the high temperature section of the gas turbine can be cooled, even in this case, the gas turbine can be operated.

In the gas turbine cooling system having the intermediate medium switching device, the intermediate medium switching device may guide the intermediate medium cooled by the second heat exchanger to the first heat exchanger in the first state, and guide the intermediate medium cooled by the preliminary cooler to the first heat exchanger in the second state.

In the gas turbine cooling system having the first heat exchanger and the second heat exchanger, the first heat exchanger may be capable of heating fuel by exchanging heat between the fuel supplied to a combustor of the gas turbine and the compressed air passing through the air-extraction line, and may include a first heated fuel line configured to guide the fuel heated by the first heat exchanger to the combustor.

In the gas turbine cooling system, since the fuel can be heated by the heat of the compressed air, the heat of the compressed air can be more effectively used.

In the gas turbine cooling system having the first heated fuel line, the second heat exchanger may be capable of heating the fuel by exchanging heat between the fuel supplied to the combustor and the intermediate medium heated by the first heat exchanger, and may include a second heated fuel line configured to guide the fuel heated by the second heat exchanger to the combustor; and a fuel switching device configured to switch between a first state in which the fuel is guided to the first heat exchanger and a second state in which the fuel is guided to the second heat exchanger.

In the gas turbine cooling system, a preheating type of the fuel can be varied according to an operation state of the gas turbine or the organic Rankine cycle.

In a gas turbine cooling system of a second aspect as defined by claim 5, the cooling apparatus has a heat exchanger configured to exchange heat between the compressed air passing through the air-extraction line and the cycle medium condensed in the organic Rankine cycle to heat and evaporate the cycle medium while cooling the compressed air.

In the gas turbine cooling system having the heat exchanger, the cooling apparatus has a preliminary cooler configured to cool the compressed air; and an air switching device configured to switch between a first state in which the compressed air passing through the air-extraction line is guided to the heat exchanger and a second state in which the compressed air passing through the air-extraction line is guided to the preliminary cooler.

In the gas turbine cooling system having the air switching device, the air switching device may guide the compressed air cooled by the heat exchanger to the cooling air line in the first state and guide the compressed air cooled by the preliminary cooler to the cooling air line in the second state.

In the gas turbine cooling system having the heat exchanger, the heat exchanger may be capable of heating the fuel by exchanging heat between the fuel supplied to the combustor of the gas turbine and the compressed air passing through the air-extraction line, and may include a heated fuel line configured to guide the fuel heated by the heat exchanger to the combustor.

In the gas turbine cooling system, since the fuel can be heated by the heat of the compressed air, the heat of the compressed air can be more effectively used.

In the gas turbine cooling system having the preliminary cooler, the heat exchanger may be capable of heating the fuel by exchanging heat between the fuel supplied to the combustor of the gas turbine and the compressed air passing through the air-extraction line, and the preliminary cooler may be capable of heating the fuel using the heat of the compressed air passing through the air-extraction line, and may have a heated fuel line configured to guide the heated fuel to the combustor; and a fuel switching device configured to guide the fuel to the heat exchanger in the first state and guide the fuel to the preliminary cooler in the second state.

In the gas turbine cooling system having the fuel switching device, the fuel switching device may guide the fuel heated by the heat exchanger to the heated fuel line in the first state and guide the fuel heated by the preliminary cooler to the heated fuel line in the second state.

In the gas turbine cooling system of any one of the aspects, the cooling apparatus may be capable of heating the fuel by exchanging heat between the fuel supplied to the combustor of the gas turbine and the compressed air passing through the air-extraction line, and may include a heated fuel line configured to guide the fuel heated by the cooling apparatus to the combustor.

In the gas turbine cooling system of any one of the aspects, each of the plurality of gas turbines may include the air-extraction line and each of the plurality of gas turbines may include the cooling air line, and the cooling apparatus may cool the compressed air while heating and evaporating the cycle medium condensed in the organic Rankine cycle using heat of the compressed air passing through the plurality of air-extraction lines.

In the gas turbine cooling system, even when the plurality of gas turbines are installed, they can correspond to the one organic Rankine cycle and an increase in equipment cost can be suppressed.

A gas turbine plant according to a third aspect of the present invention includes the gas turbine cooling system according to the invention and the gas turbine.

Since the gas turbine plant includes any one of the above-mentioned gas turbine cooling systems, the heat of the compressed air extracted from the compressor can be effectively used while cooling the high temperature section in the gas turbine.

Here, in the gas turbine plant, the high temperature section may be at least one of a member that constitutes the combustor of the gas turbine, blades of a rotor in the turbine driven by a combusted gas generated through combustion by the combustor, a shaft section of the rotor, and vanes of the turbine.

A method of cooling a high temperature section of a gas turbine according to a fourth aspect of the present invention as defined by claim 14 includes an organic Rankine cycle execution process of repeatedly circulating a cycle medium through condensation and evaporation in a cycle including a turbine and operating an organic Rankine cycle in which the turbine is driven by the evaporated cycle medium; an air extraction process of extracting compressed air from a compressor of the gas turbine; a cooling process of cooling the compressed air while heating and evaporating the cycle medium condensed in the organic Rankine cycle using heat of the compressed air extracted in the air extraction process; and a cooling air introduction process of guiding the compressed air cooled in the cooling process to the high temperature section in contact with a combusted gas in the gas turbine.

In the method of cooling the high temperature section, the high temperature section of the gas turbine can be cooled by the compressed air cooled in the cooling process. Moreover, in the method of cooling the high temperature section, since the cycle medium is heated and evaporated using the heat of the compressed air and the turbine of the organic Rankine cycle is driven by the evaporated cycle medium, the heat of the compressed air can be effectively used.

Here, in the method of cooling the high temperature section of the gas turbine according to the fourth aspect, the cooling process has a first heat exchange process of exchanging heat between the compressed air extracted in the air extraction process and an intermediate medium to heat the intermediate medium while cooling the compressed air; and a second heat exchange process of exchanging heat between the intermediate medium heated in the first heat exchange process and the cycle medium condensed in the organic Rankine cycle to cool the intermediate medium while heating and evaporating the cycle medium, and using the cooled intermediate medium for heat exchange with the compressed air in the first heat exchange process.

In the method of cooling the high temperature section of the gas turbine having the first heat exchange process and the second heat exchange process, the cooling process has a preliminary cooling process of cooling the intermediate medium, and the method may include a first state process of using the intermediate medium heated in the first heat exchange process for heat exchange with the cycle medium in the second heat exchange process and using the intermediate medium cooled in the second heat exchange process for heat exchange with the compressed air in the first heat exchange process; and a second state process of cooling the intermediate medium heated in the first heat exchange process during the preliminary cooling process, and using the intermediate medium cooled in the preliminary cooling process for heat exchange with the compressed air in the first heat exchange process.

In a method of cooling the high temperature section of the gas turbine according to a fifth aspect as defined by claim 15, the cooling process has a heat exchange process of exchanging heat between the compressed air extracted in the air extraction process and the cycle medium condensed in the organic Rankine cycle to heat and evaporate the cycle medium while cooling the compressed air.

In the method of cooling the high temperature section of the gas turbine having the heat exchange process, the cooling process has a preliminary cooling process of cooling the compressed air, and the method may include a first state process of using the compressed air extracted in the air extraction process for heat exchange with the cycle medium in the heat exchange process such that the compressed air cooled in the heat exchange process becomes compressed air guided to the high temperature section in the cooling air introduction process; and a second state process of cooling the compressed air extracted in the air extraction process during the preliminary cooling process such that the compressed air cooled in the preliminary cooling process becomes compressed air guided to the high temperature section in the cooling air introduction process.

In the method of cooling the high temperature section of the gas turbine according to any one of the above-mentioned aspects, the cooling process may have a fuel heating process of heating a fuel by exchanging heat between the fuel supplied to the combustor of the gas turbine and the compressed air extracted in the air extraction process, and the method may include a heated fuel introduction process configured to guide the fuel heated in the fuel heating process to the combustor.

In the method of cooling the high temperature section, since the fuel can be heated by the heat of the compressed air, the heat of the compressed air can be more effectively used.

### [Advantageous Effects of Invention]

According to an aspect of the present invention, heat of the compressed air extracted from the compressor can be effectively used while cooling the high temperature sections in the gas turbine.

### [Brief Description of Drawings]

Fig. 1 is a system diagram showing a state in a first state process of a gas turbine plant in a first embodiment according to the present invention.
Fig. 2 is a schematic view showing a configuration of a gas turbine in the first embodiment according to the present invention.
Fig. 3 is a system diagram showing a state in a second state process of the gas turbine plant in the first embodiment according to the present invention.
Fig. 4 is a system diagram of a gas turbine plant in a second embodiment according to the present invention.
Fig. 5 is a system diagram of a gas turbine plant in a third embodiment according to the present invention.
Fig. 6 is a system diagram showing a state in a first state process of a gas turbine plant in a fourth embodiment according to the present invention.
Fig. 7 is a system diagram showing a state in a second state process of the gas turbine plant in the fourth embodiment according to the present invention.
Fig. 8 is a system diagram showing a state in a first state process of a gas turbine plant in a fifth embodiment according to the present invention.
Fig. 9 is a system diagram showing a state in a second state process of the gas turbine plant in the fifth embodiment according to the present invention.
Fig. 10 is a schematic view showing a configuration of a gas turbine in a variant of an embodiment according to the present invention.
Fig. 11 is a schematic view showing a configuration of a combustor in a variant of an embodiment according to the present invention.

### [Description of Embodiments]

Hereinafter, various embodiments and various variants of a gas turbine plant according to the present invention will be described in detail with reference to the accompanying drawings.

### [First embodiment]

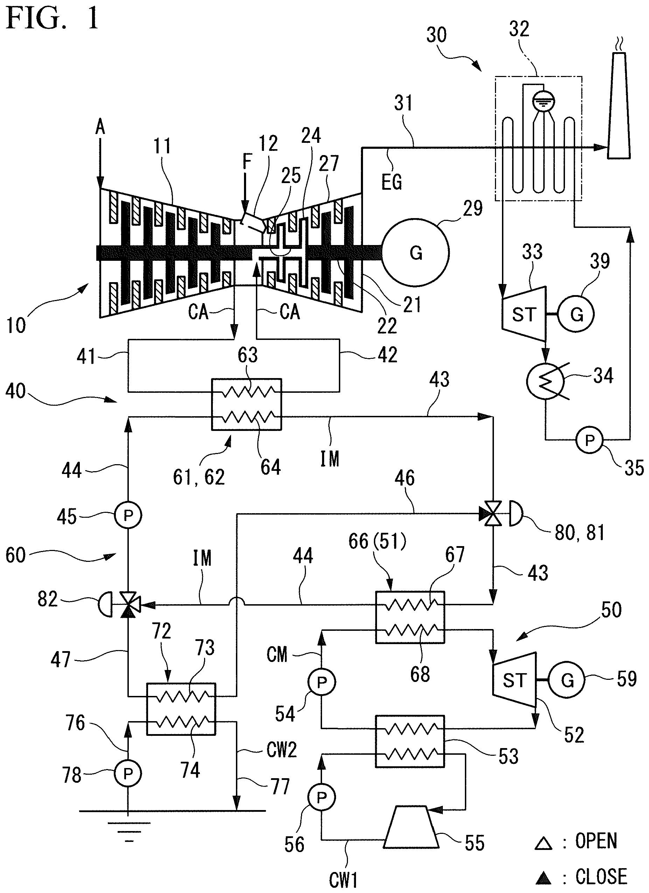

A first embodiment of a gas turbine plant according to the present invention will be described with reference to Figs. 1 to 3.

As shown in Fig. 1, the gas turbine plant of this embodiment includes a gas turbine 10, an exhaust heat recovery system 30 configured to recover heat of an exhaust gas exhausted from the gas turbine 10, and a gas turbine cooling system (hereinafter, simply referred to as a cooling system) 40 configured to cool high temperature sections in the gas turbine 10.

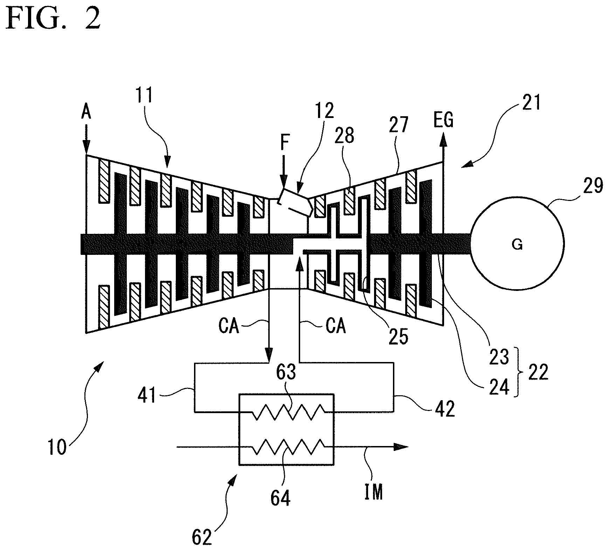

As shown in Fig. 2, the gas turbine 10 includes a compressor 11 configured to compress outside air to generate compressed air, a combustor 12 configured to combust a fuel F using compressed air CA to generate a combusted gas, and a turbine 21 driven by the combusted gas having a high temperature and a high pressure. The turbine 21 has a turbine rotor 22, and a casing 27 configured to cover the turbine rotor 22. The turbine rotor 22 has a rotor shaft section 23 configured to rotate about a central axis of rotation, and a plurality of blades 24 fixed to an outer circumference of the rotor shaft section 23. A cooling air flow path 25 through which cooling air for cooling the blades 24 passes is formed in the rotor shaft section 23 and in the blades 24. For example, a generator 29 configured to generate power using rotation of the turbine rotor 22 is connected to the turbine rotor 22. A plurality of vanes 28 are fixed to an inner circumferential side of the casing 27. The combustor 12 is fixed to the casing 27.

As shown in Fig. 1, the exhaust heat recovery system 30 includes a gas duct 31 connected to an exhaust port of the turbine 21, an exhaust heat recovery boiler 32 configured to exchange heat between an exhaust gas EG through the gas duct 31 and water to generate steam, a steam turbine 33 driven by the steam generated in the exhaust heat recovery boiler 32, a condenser 34 configured to return the steam that has driven the steam turbine 33 into water, and a feed pump 35 configured to return the water in the condenser 34 into the exhaust heat recovery boiler 32. For example, a generator 39 configured to generate power using rotation of the turbine rotor is connected to a turbine rotor of the steam turbine 33.

The cooling system 40 includes an air-extraction line 41 configured to extract the compressed air CA from the compressor 11, an organic Rankine cycle 50, a cooling apparatus 60 configured to cool the compressed air CA passing through the air-extraction line 41, and a cooling air line 42 configured to guide the compressed air CA cooled by the cooling apparatus 60 to the blades 24 serving as the high temperature sections of the gas turbine 10.

A Rankine cycle is a cycle in which a turbine is driven by steam. Meanwhile, the organic Rankine cycle 50 is a cycle in which a turbine 52 is driven using a medium having a boiling point lower than that of water (hereinafter referred to as a cycle medium) CM. The organic Rankine cycle 50 includes an evaporator 51 configured to heat and evaporate the cycle medium CM, the turbine 52 driven by the evaporated cycle medium CM, a condenser 53 configured to cool and condense the cycle medium CM that has driven the turbine 52, and a cycle medium pump 54 configured to return the condensed cycle medium CM into the evaporator 51. For example, a generator 59 configured to generate power by driving the turbine 52 is connected to the turbine 52. The condenser 53, which is a kind of heat exchanger, exchanges heat between the cycle medium CM and a cooling medium CW1 such as water or the like. For this reason, the organic Rankine cycle 50 further includes a cooler 55 such as a water cooling tower or the like configured to cool the cooling medium CW1 heated through heat exchange with the cycle medium CM, and a cooling medium pump 56 configured to return the cooling medium CW1 cooled by the cooler 55 into the condenser 53.

Further, here, while the cooling medium CW1 flowing through the condenser 53 circulates between the cooler 55 and the condenser 53, the cooler 55 may be omitted, the cooling medium CW1 such as water of a river, seawater, or the like, may be supplied into the condenser 53, and the cooling medium CW1 that has passed through the condenser 53 may be returned to the river, the sea, or the like.

The cooling apparatus 60 includes an indirect type heat exchange apparatus 61 configured to exchange heat with the compressed air CA passing through the air-extraction line 41 and the cycle medium CM condensed in the organic Rankine cycle 50 via an intermediate medium IM, a preliminary cooler 72 configured to cool the intermediate medium IM, and an intermediate medium switching device 80 configured to switch a flow destination or the like of the intermediate medium IM. The indirect type heat exchange apparatus 61 has a first heat exchanger 62 configured to exchange heat between the compressed air CA passing through the air-extraction line 41 and the intermediate medium IM, and a second heat exchanger 66 configured to exchange heat between the intermediate medium IM and the cycle medium CM condensed in the organic Rankine cycle 50.

A compressed air flow path 63 through which the compressed air CA flows and an intermediate medium flow path 64 through which the intermediate medium IM flows are formed at the first heat exchanger 62. The compressed air flow path 63 and the intermediate medium flow path 64 are adjacent to each other such that fluids flowing through the flow paths 63 and 64 can exchange heat The second heat exchanger 66 in the cooling system 40 forms the evaporator 51 that is a component of the organic Rankine cycle 50. Accordingly, in this embodiment, the second heat exchanger 66 is shared by the cooling system 40 and the organic Rankine cycle 50. An intermediate medium flow path 67 through which the intermediate medium IM flows and a cycle medium flow path 68 through which the cycle medium CM flows are formed at the second heat exchanger 66. The intermediate medium flow path 67 and the cycle medium flow path 68 are adjacent to each other such that fluids flowing through the flow paths 67 and 68 can exchange heat. An intermediate medium flow path 73 through which the intermediate medium IM passes and a cooling medium flow path 74 through which a cooling medium CW2 such as water of a river, seawater, or the like passes are formed at the preliminary cooler 72. The intermediate medium flow path 73 and the cooling medium flow path 74 are adjacent to each other such that fluids flowing through the flow paths 73 and 74 can exchange heat.

As shown in Fig. 2, the air-extraction line 41 is connected to an inlet port of the compressed air flow path 63 in the first heat exchanger 62, and the cooling air line 42 is connected to an outlet port of the compressed air flow path 63. The cooling air line 42 is connected to the cooling air flow path 25 formed at the turbine rotor 22 to cool the blades 24 that are the high temperature sections. The outlet port of the intermediate medium flow path 64 in the first heat exchanger 62 and the inlet port of the intermediate medium flow path 67 in the second heat exchanger 66 are connected by a heating intermediate medium line 43. In addition, the outlet port of the intermediate medium flow path 67 in the second heat exchanger 66 and the inlet port of the intermediate medium flow path 64 in the first heat exchanger 62 are connected by a cooling intermediate medium line 44. An intermediate medium pump 45 is installed at the cooling intermediate medium line 44.

A heating intermediate medium bypass line 46 configured to bypass the intermediate medium IM passing through the heating intermediate medium line 43 with respect to the second heat exchanger 66 is connected to the heating intermediate medium line 43. The heating intermediate medium bypass line 46 is connected to the inlet port of the intermediate medium flow path 73 in the preliminary cooler 72. A cooling intermediate medium bypass line 47 is connected to the outlet port of the intermediate medium flow path 73 in the preliminary cooler 72. The cooling intermediate medium bypass line 47 is connected to the cooling intermediate medium line 44 upstream from the intermediate medium pump 45. A cooling medium supply line 76 configured to supply the cooling medium CW2 such as water of a river, seawater, or the like is connected to the inlet port of the cooling medium flow path 74 in the preliminary cooler 72. A cooling medium returning line 77 configured to return the cooling medium CW2 passing through the cooling medium flow path 74 to the river, the sea, or the like is connected to the outlet port of the cooling medium flow path 74 in the preliminary cooler 72. A cooling medium pump 78 is installed at the cooling medium supply line 76.

A heating intermediate medium switching machine 81 is installed at a connecting portion of the heating intermediate medium line 43 and the heating intermediate medium bypass line 46. The heating intermediate medium switching machine 81 is a three-way valve. Among the three openings of the three-way valve, a first opening is connected to the first heat exchanger 62 side of the heating intermediate medium line 43 and a second opening is connected to the second heat exchanger 66 side of the heating intermediate medium line 43. In addition, the third opening of the three-way valve is connected to the heating intermediate medium bypass line 46. A cooling intermediate medium switching machine 82 is connected to a connecting portion of the cooling intermediate medium line 44 and the cooling intermediate medium bypass line 47. The cooling intermediate medium switching machine 82 is also a three-way valve. Among the three openings of the three-way valve, a first opening is connected to the second heat exchanger 66 side of the cooling intermediate medium line 44 and a second opening is connected to the first heat exchanger 62 side of the cooling intermediate medium line 44. In addition, the third opening of the three-way valve is connected to the cooling intermediate medium bypass line 47. The above-mentioned intermediate medium switching device 80 has the heating intermediate medium switching machine 81 and the cooling intermediate medium switching machine 82.

Next, an operation of the above-mentioned gas turbine plant will be described.

First, an operation in which the gas turbine 10 and the organic Rankine cycle 50 are operated will be described with reference to Fig. 1. Further, when the gas turbine 10 and the organic Rankine cycle 50 are operated, the heating intermediate medium switching machine 81 is in a first state in which the intermediate medium IM passing through the heating intermediate medium line 43 from the first heat exchanger 62 is sent to the second heat exchanger 66. In addition, the cooling intermediate medium switching machine 82 is in a first state in which the intermediate medium IM passing through the cooling intermediate medium line 44 from the second heat exchanger 66 is sent to the first heat exchanger 62.

The compressor 11 of the gas turbine 10 compresses air A in the atmosphere and supplies the compressed air CA into the combustor 12. In addition, the fuel F is also supplied into the combustor 12. In the combustor 12, the fuel F is combusted in the compressed air CA and the combusted gas having a high temperature and a high pressure is generated. The combusted gas is sent to the turbine 21 and the turbine rotor 22 is rotated. The generator 29 connected to the gas turbine 10 generates power using rotation of the turbine rotor 22.

The combusted gas that has rotated the turbine rotor 22 is exhausted from the gas turbine 10 as the exhaust gas EG and discharged to the atmosphere through the gas duct 31. The exhaust heat recovery boiler 32 exchanges heat between the exhaust gas EG passing through the gas duct 31 and water to produce steam from the water. The steam is supplied into the steam turbine 33 to drive the steam turbine 33. The steam passing through the steam turbine 33 is returned to the water in the condenser 34. The water is supplied into the exhaust heat recovery boiler 32 by the feed pump 35 to become steam again.

The compressed air CA generated by the compressor 11 is partially extracted from the compressor 11 and sent to the first heat exchanger 62 via the air-extraction line 41 (an air extraction process). In the first heat exchanger 62, heat is exchanged between the compressed air CA and the intermediate medium IM, and the intermediate medium IM is heated while the compressed air CA is cooled (a first heat exchange process). The compressed air CA is cooled, for example, from 400 °C to 230 °C as the compressed air CA passes through the first heat exchanger 62. Meanwhile, the intermediate medium IM is heated from 160 °C to 200 °C as the intermediate medium IM passes through the first heat exchanger 62. Further, in this embodiment, pressurized water is used as the intermediate medium IM in view of cost and operability. However, the intermediate medium IM may not be the pressurized water.

The compressed air CA cooled in the first heat exchanger 62 is sent to the cooling air flow path 25 of the turbine rotor 22 via the cooling air line 42 (a cooling air introduction process). The blades 24 of the turbine rotor 22 are cooled by the compressed air CA.

The intermediate medium IM heated by the first heat exchanger 62 is sent to the second heat exchanger 66 (the evaporator 51) via the heating intermediate medium line 43 and the heating intermediate medium switching machine 81. In the second heat exchanger 66, heat is exchanged between the intermediate medium IM and the cycle medium CM, and the cycle medium CM is heated to be evaporated while the intermediate medium IM is cooled (a second heat exchange process). The intermediate medium IM is cooled, for example, from 200 °C to 160 °C as the intermediate medium IM passes through the second heat exchanger 66. Meanwhile, the cycle medium CM is heated, for example, from 60 °C to 150 °C to be evaporated as the cycle medium CM passes the second heat exchanger 66. The evaporated cycle medium CM drives the turbine 52 that is a component of the organic Rankine cycle 50. The cycle medium CM that has driven the turbine 52 is sent to the condenser 53. In the condenser 53, heat is exchanged between the cycle medium CM and the cooling medium CW1, and the cycle medium CM is cooled and condensed. The condensed cycle medium CM is sent to the second heat exchanger 66 (the evaporator 51) by the cycle medium pump 54, and as described above, exchanges heat with the intermediate medium IM in the second heat exchanger 66. As described above, the cycle medium CM circulates in the organic Rankine cycle 50 (an organic Rankine cycle execution process). Further, in this embodiment, an organic medium such as cyclopentane, benzene, toluene, or the like, is used as the cycle medium CM.

The intermediate medium IM cooled by the second heat exchanger 66 is returned to the first heat exchanger 62 via the cooling intermediate medium line 44 and the cooling intermediate medium switching machine 82.

When the gas turbine 10 and the organic Rankine cycle 50 are operated, the first state process is executed. That is, in the first state process, the intermediate medium IM heated in the first heat exchange process is used for heat exchange with the cycle medium CM in the second heat exchange process, and the intermediate medium IM cooled in the second heat exchange process is used for heat exchange with the compressed air CA in the first heat exchange process.

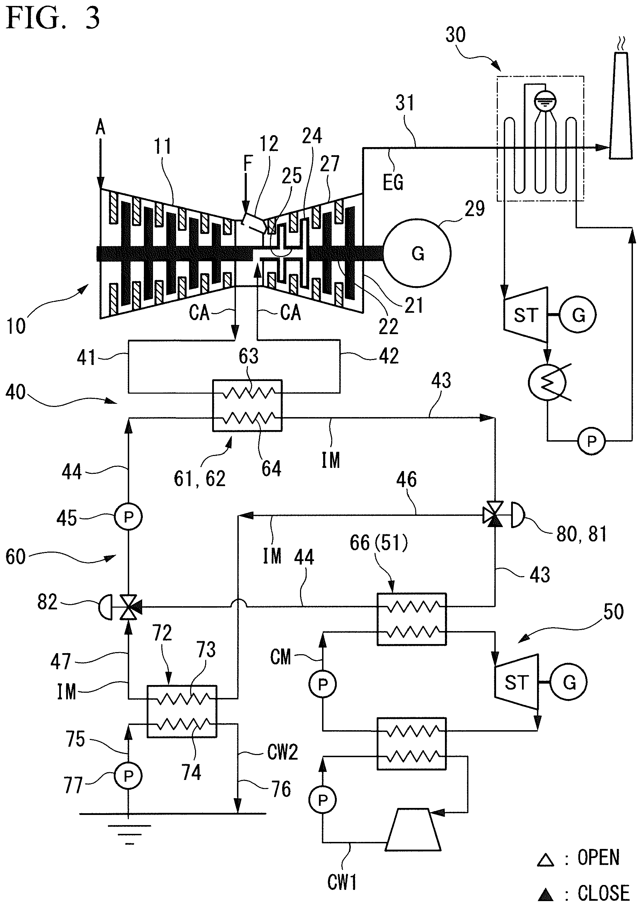

Next, an operation when the organic Rankine cycle 50 is stopped and only the gas turbine 10 is operated will be described with reference to Fig. 3. Further, when only the gas turbine 10 is operated, the heating intermediate medium switching machine 81 is in a state in which the intermediate medium IM delivered from the first heat exchanger 62 via the heating intermediate medium line 43 is sent to the preliminary cooler 72 via the heating intermediate medium bypass line 46. In addition, the cooling intermediate medium switching machine 82 is in a second state in which the intermediate medium IM delivered from the preliminary cooler 72 via the cooling intermediate medium bypass line 47 is sent to the first heat exchanger 62.

The gas turbine 10 and the exhaust heat recovery system 30 are operated as in the above-mentioned case. Like the above-mentioned case, the compressed air CA generated in the compressor 11 is partially extracted from the compressor 11 and sent to the first heat exchanger 62 via the air-extraction line 41 (an air extraction process). In the first heat exchanger 62, heat is exchanged between the compressed air CA and the intermediate medium IM, and the intermediate medium IM is heated while the compressed air CA is cooled (a first heat exchange process). The compressed air CA cooled in the first heat exchanger 62 is sent to the cooling air flow path 25 of the turbine rotor 22 via the cooling air line 42 (a cooling air introduction process).

The intermediate medium IM heated by the first heat exchanger 62 is sent to the preliminary cooler 72 via the heating intermediate medium line 43, the heating intermediate medium switching machine 81 and the heating intermediate medium bypass line 46. In the preliminary cooler 72, heat is exchanged between the intermediate medium IM and the cooling medium CW2, and the intermediate medium IM is cooled (a preliminary cooling process). The intermediate medium IM is cooled, for example, from 200 °C to 160 °C as the intermediate medium IM passes through the preliminary cooler 72.

The intermediate medium IM cooled by the preliminary cooler 72 is returned to the first heat exchanger 62 via the cooling intermediate medium bypass line 47, the cooling intermediate medium switching machine 82 and the cooling intermediate medium line 44.

When only the gas turbine 10 is operated, the second state process is executed. That is, in the second state process, the intermediate medium IM heated in the first heat exchange process is cooled in the preliminary cooling process, and the intermediate medium IM cooled in the preliminary cooling process is used for heat exchange with the compressed air CA in the first heat exchange process.

As described above, in this embodiment, since the compressed air CA extracted from the compressor 11 is cooled and sent to the high temperature sections of the gas turbine 10, the high temperature sections can be cooled. Moreover, in this embodiment, since heat is indirectly exchanged between the compressed air CA and the cycle medium CM and the cycle medium CM is heated to be used to drive the turbine 52 while the compressed air CA is cooled, heat of the compressed air CA can be effectively used.

Further, in this embodiment, since the preliminary cooler 72 is provided, even when the organic Rankine cycle 50 is stopped, the compressed air CA extracted from the compressor 11 can be cooled and the gas turbine 10 can he operated.

### [Second embodiment]

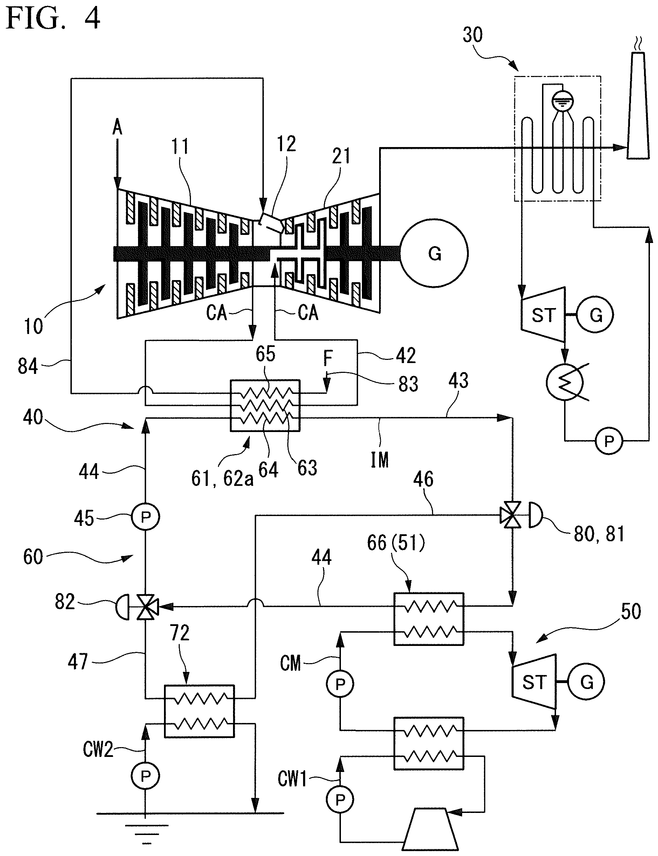

A second embodiment of a gas turbine plant according to the present invention will be described with reference to Fig. 4.

The gas turbine plant of this embodiment is distinguished from the variant of the gas turbine plant of the first embodiment in that a configuration of a first heat exchanger 62a is different from that of the first embodiment, but the other configurations are basically the same as those of the first embodiment.

The first heat exchanger 62a of this embodiment exchanges heat between the compressed air CA extracted from the compressor 11 and the intermediate medium IM, and exchanges heat between the compressed air CA extracted from the compressor 11 and the fuel F of the combustor 12. Accordingly, the compressed air flow path 63 through which the compressed air CA flows, the intermediate medium flow path 64 through which the intermediate medium IM flows and a fuel flow path 65 through which the fuel F flows are formed at the first heat exchanger 62a of this embodiment. The compressed air flow path 63 and the intermediate medium flow path 64 are adjacent to each other. Further, the compressed air flow path 63 and the fuel flow path 65 are adjacent to each other. That is, the compressed air flow path 63 is adjacent to the intermediate medium flow path 64 and the fuel flow path 65.

A non-heated fuel line 83 extending from a fuel supply source is connected to the inlet port of the fuel flow path 65 of the first heat exchanger 62a. In addition, a heated fuel line 84 is connected to the outlet port of the fuel flow path 65 of the first heat exchanger 62a. The heated fuel line 84 is connected to the combustor 12 of the gas turbine 10.

In the first heat exchanger 62a of this embodiment, like the first embodiment, heat is exchanged between the compressed air CA and the intermediate medium IM, and the intermediate medium IM is heated while the compressed air CA is cooled (a first heat exchange process). Further, in the first heat exchanger 62a of this embodiment, heat is exchanged between the compressed air CA and the fuel F, and the fuel F is heated while the compressed air CA is cooled (a fuel heating process).

Like the first embodiment, the intermediate medium IM heated by the heat exchange with the compressed air CA is cooled by the second heat exchanger 66 or the preliminary cooler 72 and then returned to the first heat exchanger 62a.

In addition, the fuel F heated by the heat exchange with the compressed air CA is sent to the combustor 12 of the gas turbine 10 via the heated fuel line 84 (a heated fuel introduction process).

As described above, in this embodiment, since the heat of the compressed air CA extracted from the compressor 11 is also used for preheating of the fuel F, the heat of the compressed air CA can be more effectively used.

### [Third embodiment]

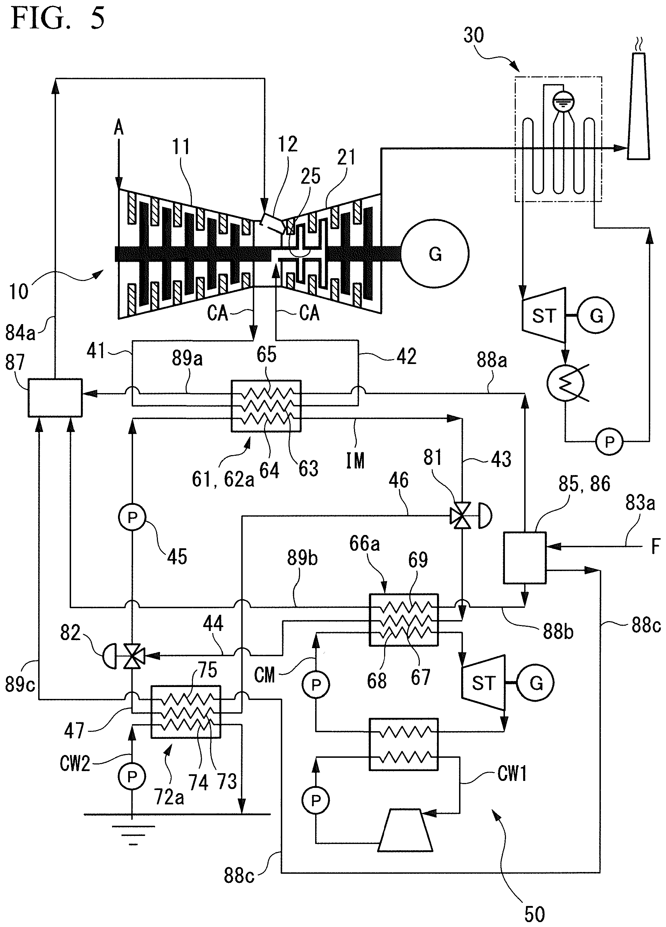

A third embodiment of a gas turbine plant according to the present invention will be described with reference to Fig. 5.

The gas turbine plant of this embodiment is also a variant of the gas turbine plant of the first embodiment. In this embodiment, fuel flow paths are further formed at each of the first heat exchanger 62, the second heat exchanger 66 and the preliminary cooler 72 of the first embodiment. In this embodiment, the fuel F is selectively guided to any one of the fuel flow paths. For this reason, the gas turbine plant of this embodiment includes a fuel switching device 85 configured to switch a flow destination or the like of the fuel F.

The first heat exchanger 62a of this embodiment exchanges heat between the compressed air CA extracted from the compressor 11 and the intermediate medium IM, and simultaneously exchanges heat between the compressed air CA and the fuel F. Accordingly, the first heat exchanger 62a of this embodiment has the compressed air flow path 63 through which the compressed air CA flows, the intermediate medium flow path 64 through which the intermediate medium IM flows, and the fuel flow path 65 through which the fuel F flows. That is, the first heat exchanger 62a of this embodiment is the same as the first heat exchanger 62a of the second embodiment.

The second heat exchanger 66a of this embodiment exchanges heat between the intermediate medium IM heated by the first heat exchanger 62a and the cycle medium CM, and simultaneously exchanges heat between the intermediate medium IM and the fuel F. Accordingly, the intermediate medium flow path 67 through which the intermediate medium IM flows, the cycle medium flow path 68 through which the cycle medium CM flows, and a fuel flow path 69 through which the fuel F flows are formed at the second heat exchanger 66a of this embodiment. The intermediate medium flow path 67 and the fuel flow path 69 of the second heat exchanger 66a are adjacent to each other. In addition, the intermediate medium flow path 67 and the cycle medium flow path 68 are adjacent to each other. That is, the intermediate medium flow path 67 is adjacent to the fuel flow path 69 and the cycle medium flow path 68.

A preliminary cooler 72a of this embodiment exchanges heat between the intermediate medium IM heated by the first heat exchanger 62a and the cooling medium CW2, and simultaneously exchanges heat between the intermediate medium IM and the fuel F. Accordingly, the intermediate medium flow path 73 through which the intermediate medium IM flows, the cooling medium flow path 74 through which the cooling medium CW2 flows, and a fuel flow path 75 through which the fuel F flows are formed at the preliminary cooler 72a of this embodiment. The intermediate medium flow path 73 and the fuel flow path 75 of the preliminary cooler 72a are adjacent to each other. In addition, the intermediate medium flow path 73 and the cooling medium flow path 74 are adjacent to each other. That is, the intermediate medium flow path 73 is adjacent to the fuel flow path 75 and the cooling medium flow path 74.

A first non-heated fuel line 88a is connected to the inlet port of the fuel flow path 65 of the first heat exchanger 62a, and a first heated fuel line 89a is connected to the outlet port of the fuel flow path 65. A second non-heated fuel line 88b is connected to the inlet port of the fuel flow path 69 of the second heat exchanger 66a, and a second heated fuel line 89b is connected to the outlet port of the fuel flow path 69. A third non-heated fuel line 88c is connected to the inlet port of the fuel flow path 75 of the preliminary cooler 72a, and a third heated fuel line 89c is connected to the outlet port of the fuel flow path 75.

All of the first non-heated fuel line 88a, the second non-heated fuel line 88b and the third non-heated fuel line 88c are also connected to a non-heated fuel switching machine 86. An integrated non-heated fuel line 83a extending from a fuel supply source is connected to the non-heated fuel switching machine 86. The non-heated fuel switching machine 86 sends the fuel F delivered from the fuel supply source via the integrated non-heated fuel line 83a to any one line of the first non-heated fuel line 88a, the second non-heated fuel line 88b and the third non-heated fuel line 88c.

All of the first heated fuel line 89a, the second heated fuel line 89b and the third heated fuel line 89c are also connected to a heated fuel switching machine 87. The integrated heated fuel line 84a is connected to the non-heated fuel switching machine 86. The heated fuel switching machine 87 sends the fuel F from any one line of the first heated fuel line 89a, the second heated fuel line 89b and the third heated fuel line 89c to the integrated heated fuel line 84a. The above-mentioned fuel switching device 85 has the non-heated fuel switching machine 86 and the heated fuel switching machine 87.

In this embodiment, since the heat of the compressed air CA extracted from the compressor 11 is also directly or indirectly used for preheating of the fuel F, the heat of the compressed air CA can be effectively used. In addition, in this embodiment, a preheating state of the fuel F can be appropriately varied according to an operating state of the gas turbine 10 or the organic Rankine cycle 50.

### [Fourth embodiment]

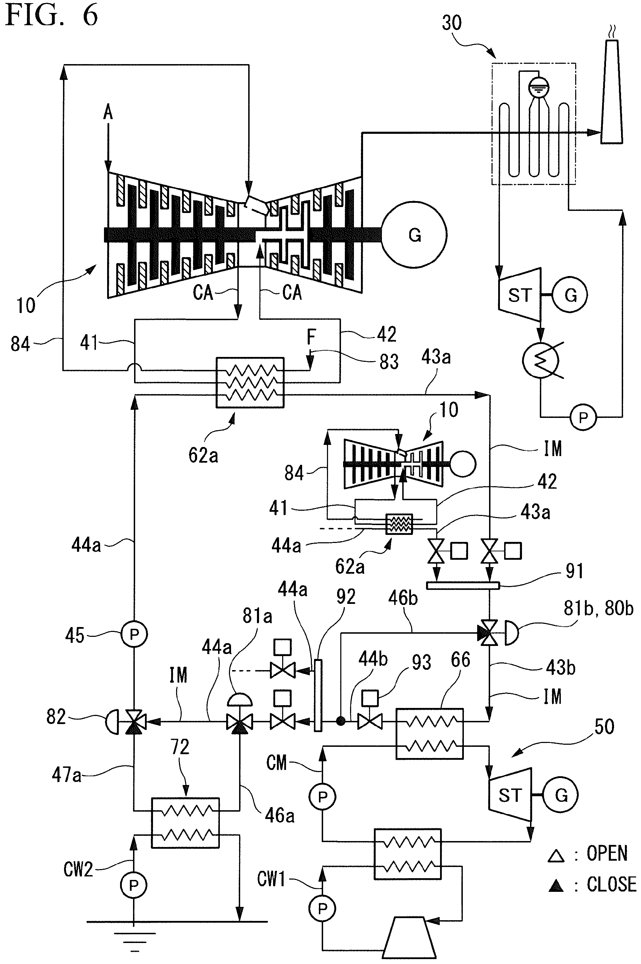

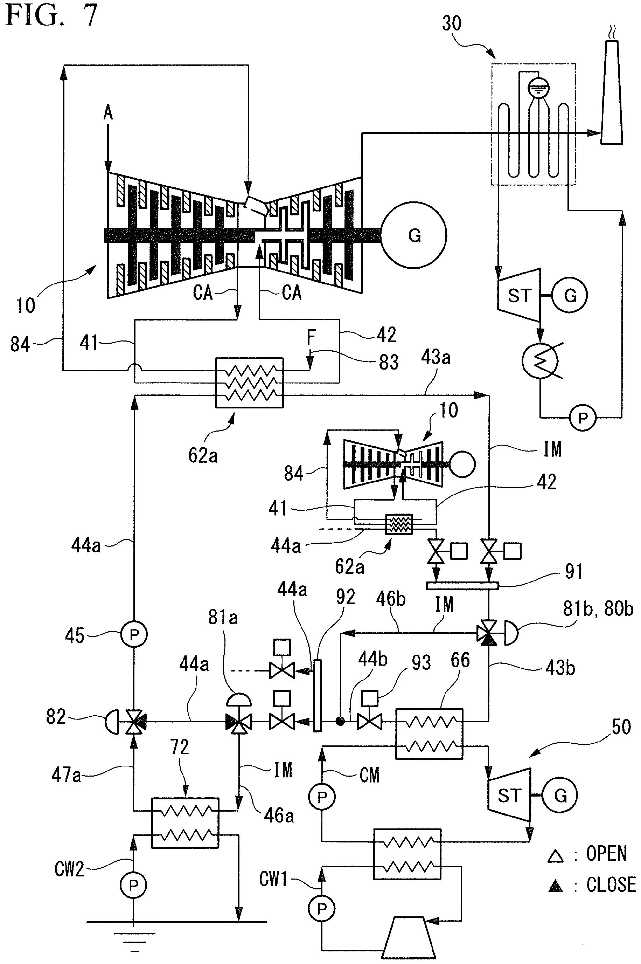

A fourth embodiment of a gas turbine plant according to the present invention will be described with reference to Figs. 6 and 7.

The gas turbine plant of this embodiment is a variant of the gas turbine plant of the second embodiment. As shown in Fig. 6, the gas turbine plant of this embodiment includes one organic Rankine cycle 50 and a plurality of gas turbines 10.

In this embodiment, each of the gas turbines 10 includes the first heat exchanger 62a, the preliminary cooler 72, the air-extraction line 41, the cooling air line 42, the heating intermediate medium line 43a, a heating intermediate medium bypass line 46a, a cooling intermediate medium line 44a, a cooling intermediate medium bypass line 47a, the intermediate medium pump 45, a heating intermediate medium switching machine 81a, and the cooling intermediate medium switching machine 82.

All of the heating intermediate medium lines 43a of the plurality of gas turbines 10 are connected to a first header 91. An integrated heating intermediate medium line 43b is connected to the first header 91. The integrated heating intermediate medium line 43b is connected to the second heat exchanger 66 that constitutes an evaporator of the organic Rankine cycle 50. The integrated cooling intermediate medium line 44b is connected to the second heat exchanger 66. The integrated heating intermediate medium bypass line 46b is further connected to the integrated heating intermediate medium line 43b. The integrated heating intermediate medium bypass line 46b is connected to the integrated cooling intermediate medium line 44b. The integrated cooling intermediate medium line 44b is connected to a second header 92. The cooling intermediate medium line 44a of each of the plurality of gas turbines 10 is connected to the second header 92. The heating intermediate medium bypass line 46a is connected to each of the cooling intermediate medium lines 44a. The heating intermediate medium bypass line 46a is connected to the preliminary cooler 72. The cooling intermediate medium bypass line 47a is connected to the preliminary cooler 72. The cooling intermediate medium bypass line 47a is connected to the cooling intermediate medium line 44a.

A gate valve 93 is installed in the integrated cooling intermediate medium line 44b upstream from a connecting portion to the integrated heating intermediate medium bypass line 46b. The integrated heating intermediate medium switching machine 81b is connected to the connecting portion of the integrated heating intermediate medium line 43b and the integrated heating intermediate medium bypass line 46b. The heating intermediate medium switching machine 81a is connected to the connecting portion of the cooling intermediate medium line 44a and the heating intermediate medium bypass line 46a. The cooling intermediate medium switching machine 82 is connected to the connecting portion of the cooling intermediate medium line 44a and the cooling intermediate medium bypass line 47a. All of these switching machines are three-way valves like the switching machine described in the above-mentioned embodiment. In this embodiment, the intermediate medium switching device 80b is constituted by the integrated heating intermediate medium switching machine 81b, the heating intermediate medium switching machine 81a of each of the plurality of gas turbines 10, and the cooling intermediate medium switching machine 82 of each of the plurality of gas turbines 10.

When the gas turbine 10 and the organic Rankine cycle 50 are operated, the first state process is executed in this embodiment as well. As shown in Fig. 6, in the first state process, the integrated heating intermediate medium switching machine 81b is in the first state in which the intermediate medium IM delivered from the first heat exchanger 62a of each of the plurality of gas turbines 10 via the heating intermediate medium line 43a and the first header 91 is sent to the second heat exchanger 66. In addition, the gate valve 93 installed at the outlet port side of the second heat exchanger 66 is in an open state. The heating intermediate medium switching machine 81a of each of the plurality of gas turbines 10 is in the first state in which the intermediate medium IM delivered via the second header 92 is sent to the cooling intermediate medium switching machine 82 of each of the plurality of gas turbines 10. The cooling intermediate medium switching machine 82 of each of the plurality of gas turbines 10 is in the first state in which the intermediate medium IM delivered via the heating intermediate medium switching machine 81a is sent to the first heat exchanger 62a.

For this reason, in the first state process, the intermediate medium IM heated by the first heat exchanger 62a of each of the plurality of gas turbines 10 is sent to the second heat exchanger 66 via the heating intermediate medium line 43a, the first header 91 and the integrated heating intermediate medium switching machine 81b of each of the plurality of gas turbines 10. In the second heat exchanger 66, the intermediate medium IM is cooled through heat exchange with the cycle medium CM. The intermediate medium IM cooled by the second heat exchanger 66 is returned to the first heat exchanger 62a of each of the plurality of gas turbines 10 via the integrated cooling intermediate medium line 44b, the gate valve 93, the second header 92, the cooling intermediate medium line 44a of each of the plurality of gas turbines 10, the heating intermediate medium switching machine 81a of each of the plurality of gas turbines 10, and the cooling intermediate medium switching machine 82 of each of the plurality of gas turbines 10.

In addition, when the organic Rankine cycle 50 is stopped and only the gas turbine 10 is operated, the second state process is executed in this embodiment as well. In the second state process, as shown in Fig. 7, the integrated heating intermediate medium switching machine 81b is in the second state in which the intermediate medium IM delivered from the first heat exchanger 62a of each of the plurality of gas turbines 10 via the heating intermediate medium line 43a and the first header 91 is sent to the integrated heating intermediate medium bypass line 46b. In addition, the gate valve 93 installed at the outlet port side of the second heat exchanger 66 is in the closed state. The heating intermediate medium switching machine 81a of each of the plurality of gas turbines 10 is in the second state in which the intermediate medium IM delivered via the second header 92 is sent to the preliminary cooler 72 of each of the plurality of gas turbines 10. The cooling intermediate medium switching machine 82 of each of the plurality of gas turbines 10 is in the second state in which the intermediate medium IM delivered via the preliminary cooler 72 is sent to the first heat exchanger 62a.

For this reason, in the second state process, the intermediate medium IM heated by the first heat exchanger 62a of each of the plurality of gas turbines 10 is sent to the preliminary cooler 72 of each of the plurality of gas turbines 10 via the heating intermediate medium line 43a of each of the plurality of gas turbines 10, the first header 91, the integrated heating intermediate medium switching machine 81b, the integrated heating intermediate medium bypass line 46b, the second header 92, the heating intermediate medium switching machine 81a of each of the plurality of gas turbines 10, and the heating intermediate medium bypass line 46a of each of the plurality of gas turbines 10. In the preliminary cooler 72, the intermediate medium IM is cooled through heat exchange with the cooling medium CW2. The intermediate medium IM cooled by the preliminary cooler 72 is returned to the first heat exchanger 62a of each of the plurality of gas turbines 10 via the cooling intermediate medium bypass line 47a of each of the plurality of gas turbines 10 and the cooling intermediate medium switching machine 82 of each of the plurality of gas turbines 10.

In the above embodiment, even when the plurality of gas turbines 10 are provided, the one organic Rankine cycle 50 may be installed, and thus an increase in equipment cost of the gas turbine plant equipped with the plurality of gas turbines 10 can be suppressed.

### [Fifth embodiment]

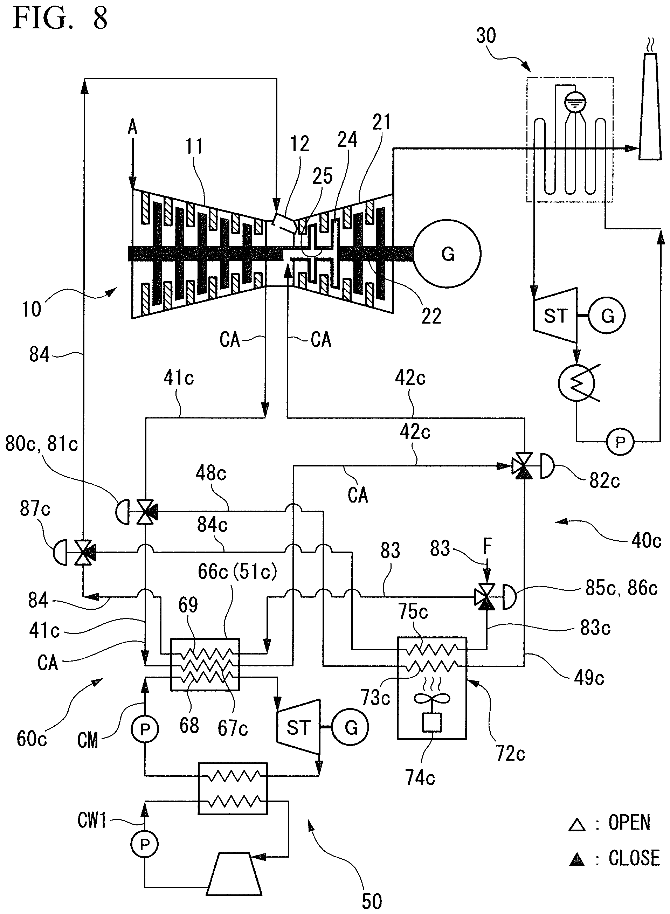

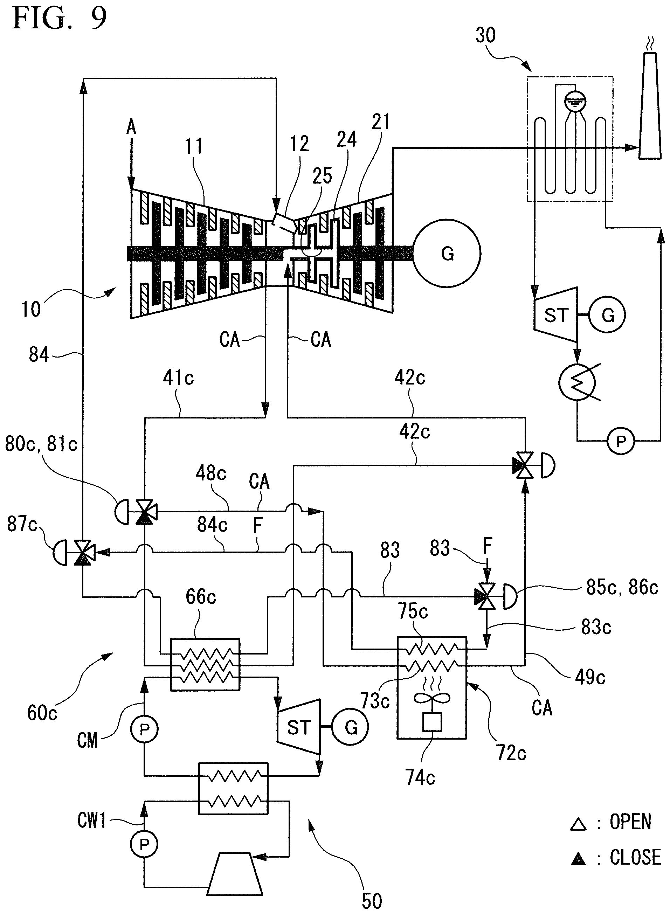

A fifth embodiment of a gas turbine plant according to the present invention will be described with reference to Figs. 8 and 9.

All of the gas turbine plants of the above-mentioned embodiments indirectly cool the compressed air CA extracted from the compressor 11 using the cycle medium CM via the intermediate medium IM. The gas turbine plant of this embodiment directly cools the compressed air CA extracted from the compressor 11 using the cycle medium CM rather than via the intermediate medium IM.

Like the above-mentioned embodiments, the cooling system 40c of the gas turbine plant of this embodiment includes an air-extraction line 41c configured to extract the compressed air CA from the compressor 11 of the gas turbine 10, the organic Rankine cycle 50, a cooling apparatus 60c configured to cool the compressed air CA passing through the air-extraction line 41c, and a cooling air line 42c configured to guide the compressed air CA cooled by the cooling apparatus 60c to the blades 24 that are high temperature sections of the gas turbine 10.

The cooling apparatus 60c of this embodiment includes a heat exchanger 66c configured to directly exchange heat between the compressed air CA passing through the air-extraction line 41c and the cycle medium CM condensed in the organic Rankine cycle 50 rather than via the intermediate medium IM, a preliminary cooler 72c configured to cool the compressed air CA passing through the air-extraction line 41c, an air switching device 80c configured to switch a flow destination or the like of the compressed air CA, and a fuel switching device 85c configured to switch a flow destination or the like of the fuel F.

The heat exchanger 66c of the cooling system 40c forms an evaporator 51c that is a component of the organic Rankine cycle 50. Accordingly, in this embodiment, the heat exchanger 66c is shared by the cooling system 40c and the organic Rankine cycle 50. A compressed air flow path 67c through which the compressed air CA flows, the cycle medium flow path 68 through which the cycle medium CM flows, and the fuel flow path 69 through which the fuel F supplied to the combustor 12 flows are formed at the heat exchanger 66c. The compressed air flow path 67c and the cycle medium flow path 68 are adjacent to each other such that heat can be exchanged between fluids flowing through the flow paths 67c and 68. The compressed air flow path 67c and the fuel flow path 69 are adjacent to each other such that heat can be exchanged between fluids flowing through the flow paths 67c and 69. That is, the compressed air flow path 67c is adjacent to the cycle medium flow path 68 and the fuel flow path 69.

The preliminary cooler 72c has a radiator 73c through which the compressed air CA passes, an air-cooling fan 74c configured to blow the outside air against the radiator 73c, and a preheater 75c configured to heat the fuel F through heat exchange between the outside air heated by heat exchange with the compressed air CA in the radiator 73c and the fuel F flowing therethrough. The air-cooling fan 74c is driven by, for example, an inverter motor. Further, the preliminary cooler 72c of this embodiment may be constituted by a heat exchanger in which a compressed air flow path through which the compressed air CA flows, a cooling medium flow path through which the cooling medium CW1 or a cooling medium such as water of a river, seawater, or the like flows, and a fuel flow path through which the fuel F flows are formed.

The air-extraction line 41c is connected to the inlet port of the compressed air flow path 67c in the heat exchanger 66c (the evaporator 51c). The cooling air line 42c is connected to the outlet port of the compressed air flow path 67c. Like the above-mentioned embodiment, the cooling air line 42c is connected to the cooling air flow path 25 formed at the turbine rotor 22. The non-heated fuel line 83 is connected to the inlet port of the fuel flow path 69 in the heat exchanger 66c. The heated fuel line 84 is connected to the outlet port of the fuel flow path 69. Like the above-mentioned embodiment, the heated fuel line 84 is connected to the combustor 12.

An extracted air bypass line 48c is connected to the air-extraction line 41c. The extracted air bypass line 48c is connected to the inlet port of the radiator 73c of the preliminary cooler 72c. A cooling air bypass line 49c is connected to the outlet port of the radiator 73c. The cooling air bypass line 49c is connected to the cooling air line 42c. A non-heated fuel bypass line 83c is connected to the non-heated fuel line 83. The non-heated fuel bypass line 83c is connected to the inlet port of the preheater 75c of the preliminary cooler 72c. A heated fuel bypass line 84c is connected to the outlet port of the preheater 75c. The heated fuel bypass line 84c is connected to the heated fuel line 84.

A non-cooling air switching machine 81c is connected to a connecting portion between the air-extraction line 41c and the extracted air bypass line 48c. The non-cooling air switching machine 81c is a three-way valve. Among the three openings of the three-way valve, a first opening is connected to the compressor 11 side of the air-extraction line 41c, and a second opening is connected to the heat exchanger 66c side of the air-extraction line 41c. In addition, the third opening of the three-way valve is connected to the extracted air bypass line 48c. A cooling air switching machine 82c is installed at a connecting portion of the cooling air line 42c and the cooling air bypass line 49c. The cooling air switching machine 82c is also a three-way valve. A first opening of the three-way valve is connected to the heat exchanger 66c side of the cooling air line 42c, and a second opening is connected to the turbine rotor 22 side of the cooling air line 42c. In addition, the third opening of the three-way valve is connected to the cooling air bypass line 49c. The above-mentioned air switching device 80c has the non-cooling air switching machine 81c and the cooling air switching machine 82c.

The non-heated fuel switching machine 86c is installed at a connecting portion of the non-heated fuel line 83 and the non-heated fuel bypass line 83c. The non-heated fuel switching machine 86c is a three-way valve. Among the three openings of the three-way valve, a first opening is connected to the fuel supply source side of the non-heated fuel line 83, and a second opening is connected to the heat exchanger 66c side of the non-heated fuel line 83. In addition, the third opening of the three-way valve is connected to the non-heated fuel bypass line 83c. The heated fuel switching machine 87c is installed at a connecting portion of the heated fuel line 84 and the heated fuel bypass line 84c. The heated fuel switching machine 87c is also a three-way valve. A first opening of the three-way valve is connected to the heat exchanger 66c side of the heated fuel line 84, and a second opening is connected to the combustor 12 side of the heated fuel line 84. In addition, the third opening of the three-way valve is connected to the heated fuel bypass line 84c. The above-mentioned fuel switching device 85c has the non-heated fuel switching machine 86c and the heated fuel switching machine 87c.

Next, an operation of the gas turbine plant described above will be described.

When the gas turbine 10 and the organic Rankine cycle 50 are operated, the first state process is executed in this embodiment as well. In the first state process, as shown in Fig. 8, the non-cooling air switching machine 81c is in the first state in which the compressed air CA extracted from the compressor 11 is sent to the heat exchanger 66c. The cooling air switching machine 82c is in the first state in which the compressed air CA cooled by the heat exchanger 66c is sent to the turbine rotor 22. In addition, the non-heated fuel switching machine 86c is in the first state in which the fuel F from the fuel supply source is sent to the heat exchanger 66c. The heated fuel switching machine 87c is in the first state in which the fuel F heated by the heat exchanger 66c is sent to the combustor 12.

For this reason, in the first state process, the compressed air CA extracted from the compressor 11 is sent to the heat exchanger 66c via the air-extraction line 41c and the non-cooling air switching machine 81c. In the heat exchanger 66c, the compressed air CA is cooled through heat exchange with the cycle medium CM (a heat exchange process). The compressed air CA cooled by the heat exchanger 66c is sent to the turbine rotor 22 via the cooling air line 42c and the cooling air switching machine 82c to cool the blades 24 (a cooling air introduction process).

In addition, in the first state process, the fuel F from the fuel supply source is sent to the heat exchanger 66c via the non-heated fuel switching machine 86c and the non-heated fuel line 83. In the heat exchanger 66c, the fuel F is heated through heat exchange with the compressed air CA (a fuel heating process). The fuel F heated by the heat exchanger 66c is sent to the combustor 12 via the heated fuel line 84 and the heated fuel switching machine 87c (a heated fuel introduction process).

In addition, when the organic Rankine cycle 50 is stopped and only the gas turbine 10 is operated, the second state process is executed in this embodiment as well. In the second state process, as shown in Fig. 9, the non-cooling air switching machine 81c is in the second state in which the compressed air CA extracted from the compressor 11 is sent to the preliminary cooler 72c via the extracted air bypass line 48c. The cooling air switching machine 82c is in the second state in which the compressed air CA cooled by the preliminary cooler 72c is sent to the turbine rotor 22 via the cooling air bypass line 49c. In addition, the non-heated fuel switching machine 86c is in the second state in which the fuel F from the fuel supply source is sent to the preliminary cooler 72c via the non-heated fuel bypass line 83c. The heated fuel switching machine 87c is in the second state in which the fuel F heated by the preliminary cooler 72c is sent to the combustor 12 via the heated fuel bypass line 84c.

For this reason, in the second state process, the compressed air CA extracted from the compressor 11 is sent to the preliminary cooler 72c via the air-extraction line 41c, the non-cooling air switching machine 81c and the extracted air bypass line 48c. In the preliminary cooler 72c, the compressed air CA is cooled through heat exchange with the outside air sent from the air-cooling fan 74c (a preliminary cooling process). The compressed air CA cooled by the preliminary cooler 72c is sent to the turbine rotor 22 via the cooling air bypass line 49c, the cooling air switching machine 82c and the cooling air line 42c to cool the blades 24 (a cooling air introduction process).

In addition, in the second state process, the fuel F from the fuel supply source is sent to the preliminary cooler 72c via the non-heated fuel switching machine 86c and the non-heated fuel bypass line 83c. In the preliminary cooler 72c, the fuel F is heated through heat exchange with the outside air heated through heat exchange with the compressed air CA (a fuel heating process). The fuel F heated by the preliminary cooler 72c is sent to the combustor 12 via the heated fuel bypass line 84c, the heated fuel switching machine 87c and the heated fuel line 84 (a heated fuel introduction process).

In the above embodiment, while heat is directly exchanged between the compressed air CA and the cycle medium CM to cool the compressed air CA, since the cycle medium CM is heated to be used to drive the turbine 52, the heat of the compressed air CA can be effectively used.

Further, since the preliminary cooler 72c is provided in this embodiment as well, even when the organic Rankine cycle 50 is stopped, the compressed air CA extracted from the compressor 11 can be cooled.

In addition, in this embodiment, since the intermediate medium IM is not involved in heat exchange between the compressed air CA and the cycle medium CM, a configuration of equipment can be simplified and an increase in equipment cost can be suppressed.

Here, a case in which the organic Rankine cycle 50 is abruptly stopped when the gas turbine 10 and the organic Rankine cycle 50 are operated together will be described.

When the organic Rankine cycle 50 is abruptly stopped, the air switching device 80c and the fuel switching device 85c are switched from the first state shown in Fig. 8 to the second state shown in Fig. 9. The switching has slight time lag from stoppage of the organic Rankine cycle 50. For this reason, when the organic Rankine cycle 50 is stopped, the compressed air CA is temporarily not cooled. Meanwhile, like the first to fourth embodiments, when heat is exchanged between the compressed air CA and the cycle medium CM via the intermediate medium IM, even though there is slight time lag until the switching device is switched from stoppage of the organic Rankine cycle 50, the compressed air CA can be cooled by the intermediate medium IM. Accordingly, even when the switching from the first state to the second state is provided, in order to continuously cool the compressed air CA, it is preferable for heat to be exchanged between the compressed air CA and the cycle medium CM via the intermediate medium IM.

For this reason, it is preferable to be determined whether the intermediate medium IM is involved in heat exchange between the compressed air CA and the cycle medium CM by comparing and considering the equipment cost and necessity of continuously cooling the compressed air CA.

### [Various variants]

Next, various variants of the above-mentioned gas turbine plants will be described.

While all of the switching machines of the above-mentioned embodiments are three-way valves, they may be two valves. Specifically, when one line is branched off into two lines, valves may be installed at the two lines of the branch line, and the switching machine may be constituted by these valves.

In the second to fifth embodiments, in order to exchange heat between three kinds of media, the flow paths through which the media flow are formed at one heat exchanger. That is, three flow paths are formed at one heat exchanger. However, when heat is exchanged between the three kinds of media, using the two heat exchangers, heat may be exchanged between two kinds of media in the heat exchangers. For example, the first heat exchanger 62a (see Fig. 4) of the second embodiment may be constituted by a heat exchanger configured to exchange heat between the compressed air CA and the fuel F to heat the fuel F while cooling the compressed air CA, and a heat exchanger configured to exchange heat between the compressed air CA and the intermediate medium IM to heat the intermediate medium IM while cooling the compressed air CA.

While the fourth embodiment is a variant of the second embodiment, even in the first embodiment, the third embodiment and the fifth embodiment, like the fourth embodiment, the one organic Rankine cycle 50 may be installed with respect to the plurality of gas turbines 10.

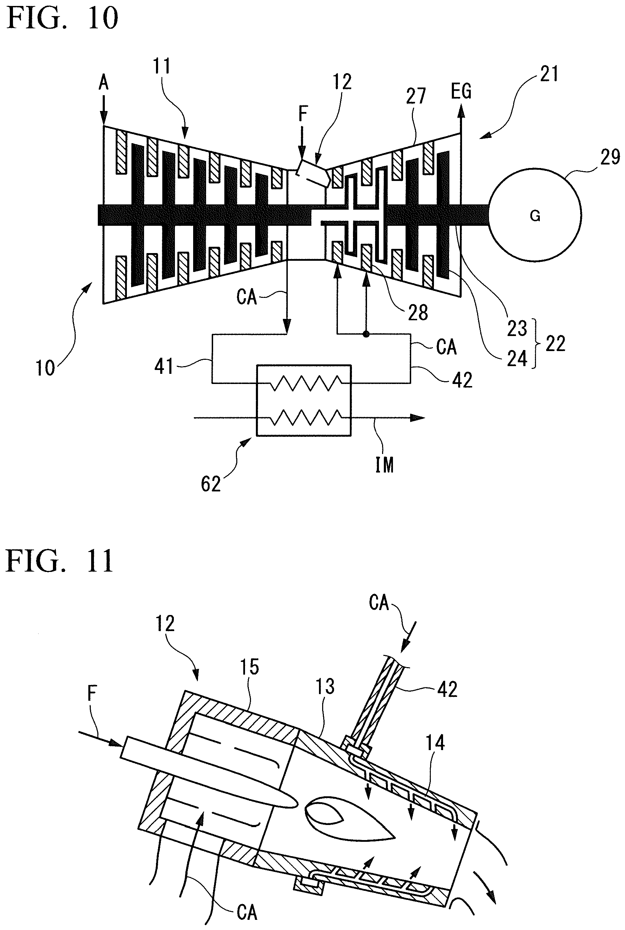

In the above-mentioned embodiments, the blades 24 of the turbine 21 of the gas turbine 10, which are the high temperature sections, are cooled. However, the high temperature sections may be any portion as long as the portion comes in contact with the combusted gas in the gas turbine 10. For example, the rotor shaft sections 23 (see Fig. 2) of the turbine 21 of the gas turbine 10, which are the high temperature sections, may be cooled. In addition, as shown in Fig. 10, the vanes 28 of the turbine 21 of the gas turbine 10, which are the high temperature section, may be connected to the cooling air line 42 to be cooled. In addition, as shown in Fig. 11, some of members that constitute the combustor 12 of the gas turbine 10, which are the high temperature section, may be cooled. The combustor 12 has a heat chamber in which the fuel F is combusted or a tail pipe 13, and a fuel injection apparatus 15 configured to inject the fuel F and the compressed air CA into the heat chamber or the tail pipe 13. Here, a cooling air flow path 14 may be formed at the heat chamber or the tail pipe 13 serving as the high temperature section, and may guide the compressed air CA cooled by the cooling air flow path 14 to cool the heat chamber or the tail pipe 13.

### [Industrial Applicability]

According to the aspects of the present invention, heat of the compressed air extracted from the compressor can be effectively used while cooling the high temperature sections in the gas turbine.

### [Reference Signs List]

10 Gas turbine
11 Compressor
12 Combustor
21 Turbine
22 Turbine rotor
23 Rotor shaft section
24 Blade
25 Cooling air flow path
27 Casing
28 Vane
30 Exhaust heat recovery system
40, 40c Gas turbine cooling system
41, 41c Air-extraction line
42, 42c Cooling air line
43, 43a Heating intermediate medium line
43b Integrated heating intermediate medium line
44, 44a Cooling intermediate medium line
44b Integrated cooling intermediate medium line
45 Intermediate medium pump
46, 46a Heating intermediate medium bypass line
46b Integrated heating intermediate medium bypass line
47, 47a Cooling intermediate medium bypass line
50 Organic Rankine cycle
51 Evaporator
52 Turbine
53 Condenser
54 Cycle medium pump
60, 60c Cooling apparatus
61 Indirect type heat exchange apparatus
62, 62a First heat exchanger
66, 66a Second heat exchanger
66c Heat exchanger
72, 72a, 72c Preliminary cooler
80, 80b Intermediate medium switching device
80c Air switching device
81, 81a Heating intermediate medium switching machine
81b Integrated heating intermediate medium switching machine
81c Non-cooling air switching machine
82 Cooling intermediate medium switching machine
82c Cooling air switching machine
83 Non-heated fuel line
83a Integrated non-heated fuel line
84 Heated fuel line
84a Integrated heated fuel line
85, 85c Fuel switching device
86, 86c Non-heated fuel switching machine
87, 87c Heated fuel switching machine
91 First header
92 Second header

## Claims

1. A gas turbine cooling system (40) configured to cool a high temperature section in contact with a combusted gas in a gas turbine (10) using compressed air (CA) extracted from a compressor (11) of the gas turbine (10), the gas turbine cooling system (40) comprising:
an organic Rankine cycle (50) configured to repeatedly circulate a cycle medium (CM) through condensation and evaporation in a cycle including a turbine (52) and drive the turbine (52) using the evaporated cycle medium (CM);
an air-extraction line (41) configured to extract the compressed air (CA) from the compressor (11);
a cooling apparatus (60) configured to cool the compressed air (CA) while heating and evaporating the cycle medium (CM) condensed in the organic Rankine cycle (50) using heat of the compressed air (CA) passing through the air-extraction line (41); and
a cooling air line (42) configured to guide the compressed air (CA) cooled by the cooling apparatus (60) to the high temperature section,
wherein the cooling apparatus (60) has:
an indirect type heat exchange apparatus (61) configured to exchange heat between the compressed air (CA) passing through the air-extraction line (41) and the cycle medium (CM) condensed in the organic Rankine cycle (50) via an intermediate medium (IM), wherein the indirect type heat exchange apparatus (61) has:
a first heat exchanger (62;62a) configured to exchange heat between the compressed air (CA) passing through the air-extraction line (41) and the intermediate medium (IM) to heat the intermediate medium (IM) while cooling the compressed air (CA); and
a second heat exchanger (66;66a) configured to exchange heat between the intermediate medium (IM) heated by the first heat exchanger (62;62a) and the cycle medium (CM) condensed in the organic Rankine cycle (50) to cool the intermediate medium (IM) and to return the intermediate medium (IM) to the first heat exchanger (62;62a) while heating and evaporating the cycle medium (CM);
a preliminary cooler (72;72a) configured to cool the intermediate medium (IM); and
an intermediate medium switching device (80) configured to switch between a first state in which the intermediate medium (IM) heated by the first heat exchanger (62;62a) is guided to the second heat exchanger (66;66a) and a second state in which the intermediate medium (IM) heated by the first heat exchanger (62;62a) is guided to the preliminary cooler (72;72a).

2. The gas turbine cooling system (40) according to claim 1, wherein the intermediate medium switching device (80) is configured to guide the intermediate medium (IM) cooled by the second heat exchanger (66;66a) to the first heat exchanger (62;62a) in the first state, and to guide the intermediate medium (IM) cooled by the preliminary cooler (72;72a) to the first heat exchanger (62;62a) in the second state.

3. The gas turbine cooling system (40) according to claim 1 or 2, wherein the first heat exchanger (62a) is capable of heating a fuel (F) by exchanging heat between the fuel (F) supplied to a combustor (12) of the gas turbine (10) and the compressed air (CA) passing through the air-extraction line (41), and
comprises a first heated fuel line (84) configured to guide the fuel (F) heated by the first heat exchanger (62a) to the combustor (12).

4. The gas turbine cooling system (40) according to claim 3, wherein the second heat exchanger (66a) is capable of heating the fuel (F) by exchanging heat between the fuel (F) supplied to the combustor (12) and the intermediate medium (IM) heated by the first heat exchanger (62a), and comprises:
a second heated fuel line (89b) configured to guide the fuel (F) heated by the second heat exchanger (66a) to the combustor (12); and
a fuel switching device (85) configured to switch between a first state in which the fuel (F) is guided to the first heat exchanger (62a) and a second state in which the fuel (F) is guided to the second heat exchanger (66a).

5. A gas turbine cooling system (40c) configured to cool a high temperature section in contact with a combusted gas in a gas turbine (10) using compressed air (CA) extracted from a compressor (11) of the gas turbine (10), the gas turbine cooling system comprising (40c):
an organic Rankine cycle (50) configured to repeatedly circulate a cycle medium (CM) through condensation and evaporation in a cycle including a turbine (52) and drive the turbine (52) using the evaporated cycle medium (CM);
an air-extraction line (41c) configured to extract the compressed air (CA) from the compressor (11);
a cooling apparatus (60c) configured to cool the compressed air (CA) while heating and evaporating the cycle medium (CM) condensed in the organic Rankine cycle (50) using heat of the compressed air (CA) passing through the air-extraction line (41c); and
a cooling air line (42c) configured to guide the compressed air (CA) cooled by the cooling apparatus (60c) to the high temperature section,
wherein the cooling apparatus (60c) has:
a heat exchanger (66c) configured to exchange heat between the compressed air (CA) passing through the air-extraction line (41c) and the cycle medium (CM) condensed in the organic Rankine cycle (50) to heat and evaporate the cycle medium (CM) while cooling the compressed air (CA);
a preliminary cooler (72c) configured to cool the compressed air (CA); and
an air switching device (80c) configured to switch between a first state in which the compressed air (CA) passing through the air-extraction line (41c) is guided to the heat exchanger (66c) and a second state in which the compressed air (CA) passing through the air-extraction line (41c) is guided to the preliminary cooler (72c).

6. The gas turbine cooling system (40c) according to claim 5, wherein the air switching device (80c) is configured to guide the compressed air (CA) cooled by the heat exchanger (66c) to the cooling air line (42c) in the first state and to guide the compressed air (CA) cooled by the preliminary cooler (72c) to the cooling air line (42c) in the second state.

7. The gas turbine cooling system (40c) according to claim 5 or 6, wherein the heat exchanger (66c) is capable of heating the fuel (F) by exchanging heat between the fuel (F) supplied to the combustor (12) of the gas turbine (10) and the compressed air (CA) passing through the air-extraction line (41c), and comprises a heated fuel line (84) configured to guide the fuel (F) heated by the heat exchanger (66c) to the combustor (12).

8. The gas turbine cooling system (40c) according to claim 5 or 6, wherein the heat exchanger (66c) is capable of heating the fuel (F) by exchanging heat between the fuel (F) supplied to the combustor (12) of the gas turbine (10) and the compressed air (CA) passing through the air-extraction line (41c), and
the preliminary cooler (72c) is capable of heating the fuel (F) using the heat of the compressed air (CA) passing through the air-extraction line (41c), and has:
a heated fuel line (84) configured to guide the heated fuel (F) to the combustor (12); and
a fuel switching device (85c) configured to guide the fuel (F) to the heat exchanger (66c) in the first state and to guide the fuel (F) to the preliminary cooler (72c) in the second state.

9. The gas turbine cooling system (40c) according to claim 8, wherein the fuel switching device (85c) is configured to guide the fuel (F) heated by the heat exchanger (66c) to the heated fuel line (84) in the first state and to guide the fuel (F) heated by the preliminary cooler (72c) to the heated fuel line (84) in the second state.

10. The gas turbine cooling system (40;40c) according to any one of claims 1, 2, 5 and 6, wherein the cooling apparatus (60;60c) is capable of heating the fuel (F) by exchanging heat between the fuel (F) supplied to the combustor (12) of the gas turbine (10) and the compressed air (CA) passing through the air-extraction line (41;41c), and comprises a heated fuel line (84;84a) configured to guide the fuel (F) heated by the cooling apparatus (60;60c) to the combustor (12) .

11. The gas turbine cooling system (40;40c) according to any one of claims 1 to 10, wherein each of a plurality of gas turbines (10) comprises the air-extraction line (41;41c) and each of the plurality of gas turbines (10) comprises the cooling air line (42;42c), and
the cooling apparatus (60,60c) is configured to cool the compressed air (CA) while heating and evaporating the cycle medium (CM) condensed in the organic Rankine cycle (50) using heat of the compressed air (CA) passing through the plurality of air-extraction lines (42;42c).

12. A gas turbine plant comprising:
the gas turbine cooling system (40;40c) according to any one of claims 1 to 11; and
a gas turbine (10).

13. The gas turbine plant according to claim 12, wherein the high temperature section is at least one of a member that constitutes the combustor (12) of the gas turbine (10), blades (24) of a rotor (22) in the turbine (21) driven by a combusted gas generated through combustion by the combustor (12), a shaft section of the rotor (22), and vanes (28) of the turbine (21).

14. A method of cooling a high temperature section of a gas turbine (10) comprising:
an organic Rankine cycle execution process of repeatedly circulating a cycle medium (CM) through condensation and evaporation in a cycle including a turbine (52) and operating an organic Rankine cycle (50) in which the turbine (52) is driven by the evaporated cycle medium (CM);
an air extraction process of extracting compressed air (CA) from a compressor (11) of the gas turbine (10);
a cooling process of cooling the compressed air (CA) while heating and evaporating the cycle medium (CM) condensed in the organic Rankine cycle (50) using heat of the compressed air (CA) extracted in the air extraction process; and
a cooling air introduction process of guiding the compressed air (CA) cooled in the cooling process to the high temperature section in contact with a combusted gas in the gas turbine (10),
wherein the cooling process has:
a first heat exchange process of exchanging heat between the compressed air (CA) extracted in the air extraction process and an intermediate medium (IM) to heat the intermediate medium (IM) while cooling the compressed air (CA) ;
a second heat exchange process of exchanging heat between the intermediate medium (IM) heated in the first heat exchange process and the cycle medium (CM) condensed in the organic Rankine cycle (50) to cool the intermediate medium (IM) while heating and evaporating the cycle medium (CM), and using the cooled intermediate medium (IM) for heat exchange with the compressed air (CA) in the first heat exchange process; and
a preliminary cooling process of cooling the intermediate medium (IM), and
wherein the method comprises:
a first state process of using the intermediate medium (IM) heated in the first heat exchange process for heat exchange with the cycle medium (CM) in the second heat exchange process and using the intermediate medium (IM) cooled in the second heat exchange process for heat exchange with the compressed air (CA) in the first heat exchange process; and
a second state process of cooling the intermediate medium (IM) heated in the first heat exchange process during the preliminary cooling process, and using the intermediate medium (IM) cooled in the preliminary cooling process for heat exchange with the compressed air (CA) in the first heat exchange process.

15. A method of cooling a high temperature section of a gas turbine (10) comprising:
an organic Rankine cycle execution process of repeatedly circulating a cycle medium (CM) through condensation and evaporation in a cycle including a turbine (52) and operating an organic Rankine cycle (50) in which the turbine (52) is driven by the evaporated cycle medium (52);
an air extraction process of extracting compressed air (CA) from a compressor (11) of the gas turbine (10);
a cooling process of cooling the compressed air (CA) while heating and evaporating the cycle medium (CM) condensed in the organic Rankine cycle (50) using heat of the compressed air (CA) extracted in the air extraction process; and
a cooling air introduction process of guiding the compressed air (CA) cooled in the cooling process to the high temperature section in contact with a combusted gas in the gas turbine (10),
wherein the cooling process has:
a heat exchange process of exchanging heat between the compressed air (CA) extracted in the air extraction process and the cycle medium (CM) condensed in the organic Rankine cycle (50) to heat and evaporate the cycle medium (CM) while cooling the compressed air (CA); and
a preliminary cooling process of cooling the compressed air (CA), and
wherein the method comprises:
a first state process of using the compressed air (CA) extracted in the air extraction process for heat exchange with the cycle medium (CM) in the heat exchange process such that the compressed air (CA) cooled in the heat exchange process becomes compressed air (CA) guided to the high temperature section in the cooling air introduction process; and
a second state process of cooling the compressed air (CA) extracted in the air extraction process during the preliminary cooling process such that the compressed air (CA) cooled in the preliminary cooling process becomes compressed air (CA) guided to the high temperature section in the cooling air introduction process.

16. The method of cooling the high temperature section of the gas turbine (10) according to claim 14 or 15, wherein the cooling process has a fuel heating process of heating a fuel (F) by exchanging heat between the fuel (F) supplied to the combustor (12) of the gas turbine (10) and the compressed air (CA) extracted in the air extraction process, and
the method comprises a heated fuel introduction process configured to guide the fuel (F) heated in the fuel heating process to the combustor (12).

## Patentansprüche

1. Ein Gasturbinen-Kühlsystem (40), das konfiguriert ist, um einen Hochtemperaturabschnitt, der in Kontakt mit einem Verbrennungsgas in einer Gasturbine (10) ist, unter Verwendung von komprimierter Luft (CA) zu kühlen, die von einem Kompressor (11) der Gasturbine (10) extrahiert wurde, wobei das Gasturbinen-Kühlsystem (40) aufweist:
einen organischen Rankine-Kreisprozess (50), der konfiguriert ist, um ein Kreislaufmedium (CM) wiederholt durch Kondensation und Verdampfung in einem Kreislauf enthaltend eine Turbine (52) zu zirkulieren und die Turbine (52) unter Verwendung des verdampften Kreislaufmediums (CM) anzutreiben,
eine Luftextraktionsleitung (41), die konfiguriert ist, um die komprimierte Luft (CA) von dem Kompressor (11) zu extrahieren,
eine Kühlvorrichtung (60), die konfiguriert ist, um die komprimierte Luft (CA) zu kühlen, während das Kreislaufmedium (CM), das in dem organischen Rankine-Kreisprozess (50) kondensiert wird, unter Verwendung von Wärme der komprimierten Luft (CA), die durch die Luftextraktionsleitung (41) passiert, erwärmt und verdampft wird, und
eine Kühlluftleitung (42), die konfiguriert ist, um die komprimierte Luft (CA), die durch die Kühlvorrichtung (60) gekühlt wurde, zu dem Hochtemperaturabschnitt zu leiten,
wobei die Kühlvorrichtung (60) aufweist:
eine indirekte Wärmetauschervorrichtung (61), die konfiguriert ist, um Wärme zwischen der komprimierten Luft (CA), die durch die Luftextraktionsleitung (41) passiert, und dem Kreislaufmedium (CM), das in dem organischen Rankine-Kreisprozess (50) kondensiert wird, über ein Zwischenmedium (IM) auszutauschen, wobei die indirekte Wärmetauschervorrichtung (61) aufweist:
einen ersten Wärmetauscher (62;62a), der konfiguriert ist, um Wärme zwischen der komprimierten Luft (CA), die durch die Luftextraktionsleitung (41) passiert, und dem Zwischenmedium (IM) auszutauschen, um das Zwischenmedium (IM) zu erwärmen, während die komprimierte Luft (CA) gekühlt wird, und
einen zweiten Wärmetauscher (66;66a), der konfiguriert ist, um Wärme zwischen dem Zwischenmedium (IM), das durch den ersten Wärmetauscher (62;62a) erwärmt wurde, und dem Kreislaufmedium (CM), das in dem organischen Rankine-Kreisprozess (50) kondensiert wurde, auszutauschen, um das Zwischenmedium (IM) zu kühlen und um das Zwischenmedium (IM) zu dem ersten Wärmetauscher (62;62a) zurückzuführen, während das Kreislaufmedium (CM) erwärmt und verdampft wird,
einen Vorkühler (72;72a), der konfiguriert ist, um das Zwischenmedium (IM) zu kühlen, und
eine Zwischenmedium-Schaltvorrichtung (80), die konfiguriert ist, um zwischen einem ersten Zustand, in dem das Zwischenmedium (IM), das durch den ersten Wärmetauscher (62;62a) erwärmt wurde, zu dem zweiten Wärmetauscher (66;66a) geleitet wird, und einem zweiten Zustand, in dem das Zwischenmedium (IM), das durch den ersten Wärmetauscher (62;62a) erwärmt wurde, zu dem Vorkühler (72;72a) geleitet wird, umzuschalten.

2. Das Gasturbinen-Kühlsystem (40) gemäß Anspruch 1, wobei die Zwischenmedium-Umschaltvorrichtung (80) konfiguriert ist, um das Zwischenmedium (IM), das durch den zweiten Wärmetauscher (66;66a) gekühlt wurde, zu dem ersten Wärmetauscher (62;62a) in dem ersten Zustand zu leiten, und um das Zwischenmedium (IM), das durch den Vorkühler (72;72a) gekühlt wurde, zu dem ersten Wärmetauscher (62;62a) in dem zweiten Zustand zu leiten.

3. Das Gasturbinen-Kühlsystem (40) gemäß Anspruch 1 oder 2, wobei der erste Wärmetauscher (62a) einen Brennstoff (F) durch Austausch von Wärme zwischen dem Brennstoff (F), der einer Brennkammer (12) der Gasturbine (10) zugeführt wird, und der komprimierten Luft (CA), die durch die Luftextraktionsleitung (41) passiert, zu erwärmen, und
er eine erste Leitung für erwärmten Brennstoff (84) aufweist, die konfiguriert ist, um den Brennstoff (F), der durch den ersten Wärmetauscher (62a) erwärmt wurde, zu der Brennkammer (12) zu leiten.

4. Das Gasturbinen-Kühlsystem (40) gemäß Anspruch 3, wobei der zweite Wärmetauscher (66a) den Brennstoff (F) durch Austausch von Wärme zwischen dem Brennstoff (F), der der Brennkammer (12) zugeführt wird, und dem Zwischenmedium (IM), das durch den ersten Wärmetauscher (62a) erwärmt wurde, zu erwärmen, und er aufweist:
eine zweite Leitung für erwärmten Brennstoff (89b), die konfiguriert ist, um den Brennstoff (F), der durch den zweiten Wärmetauscher (66a) erwärmt wurde, zu der Brennkammer (12) zu leiten, und
eine Brennstoff-Umschaltvorrichtung (85), die konfiguriert ist, um zwischen einem ersten Zustand, in dem der Brennstoff (F) zu dem ersten Wärmetauscher (62a) geleitet wird, und einem zweiten Zustand, in dem der Brennstoff (F) zu dem zweiten Wärmetauscher (66a) geleitet wird, umzuschalten.

5. Ein Gasturbinen-Kühlsystem (40c), das konfiguriert ist, um einen Hochtemperaturabschnitt, der in Kontakt mit einem Verbrennungsgas in einer Gasturbine (10) ist, unter Verwendung von komprimierter Luft (CA) zu kühlen, die von einem Kompressor (11) der Gasturbine (10) extrahiert wurde, wobei das Gasturbinen-Kühlsystem (40c) aufweist:
einen organischen Rankine-Kreisprozess (50), der konfiguriert ist, um ein Kreislaufmedium (CM) wiederholt durch Kondensation und Verdampfung in einem Kreislauf enthaltend eine Turbine (52) zu zirkulieren und die Turbine (52) unter Verwendung des verdampften Kreislaufmediums (CM) anzutreiben,
eine Luftextraktionsleitung (41c), die konfiguriert ist, um die komprimierte Luft (CA) von dem Kompressor (11) zu extrahieren,
eine Kühlvorrichtung (60c), die konfiguriert ist, um die komprimierte Luft (CA) zu kühlen, während das Kreislaufmedium (CM), das in dem organischen Rankine-Kreisprozess (50) kondensiert wird, unter Verwendung von Wärme der komprimierten Luft (CA), die durch die Luftextraktionsleitung (41c) passiert, erwärmt und verdampft wird, und
eine Kühlluftleitung (42c), die konfiguriert ist, um die komprimierte Luft (CA), die durch die Kühlvorrichtung (60c) gekühlt wurde, zu dem Hochtemperaturabschnitt zu leiten,
wobei die Kühlvorrichtung (60c) aufweist:
einen Wärmetauscher (66c), der konfiguriert ist, um Wärme zwischen der komprimierten Luft (CA), die durch die Luftextraktionsleitung (41c) passiert, und dem Kreislaufmedium (CM), das in dem organischen Rankine-Kreisprozess (50) kondensiert wurde, auszutauschen, um das Kreislaufmedium (CM) zu erwärmen und zu verdampfen, während die komprimierte Luft (CA) gekühlt wird,
einen Vorkühler (72c), der konfiguriert ist, um die komprimierte Luft (CA) zu kühlen, und
eine Luft-Umschaltvorrichtung (80c), die konfiguriert ist, um zwischen einem ersten Zustand, in dem die komprimierte Luft (CA), die durch die Luftextraktionsleitung (41c) passiert, zu dem Wärmetauscher (66c) geleitet wird, und einem zweiten Zustand, in dem die komprimierte Luft (CA), die durch die Luftextraktionsleitung (41c) passiert, zu dem Vorkühler (72c) geleitet wird, umzuschalten.

6. Das Gasturbinen-Kühlsystem (40c) gemäß Anspruch 5, wobei die Luftumschaltvorrichtung (80c) konfiguriert ist, um die komprimierte Luft (CA), die durch den Wärmetauscher (66c) gekühlt wurde, zu der Kühlluftleitung (42c) in dem ersten Zustand zu leiten und um die komprimierte Luft (CA), die durch den Vorkühler (72c) gekühlt wurde, zu der Kühlluftleitung (42c) in dem zweiten Zustand zu leiten.

7. Das Gasturbinen-Kühlsystem (40c) gemäß Anspruch 5 oder 6, wobei der Wärmetauscher (66c) den Brennstoff (F) durch Austausch von Wärme zwischen dem Brennstoff (F), der der Brennkammer (12) der Gasturbine (10) zugeführt wird, und der komprimierten Luft (CA), die durch die Luftextraktionsleitung (41c) passiert, erwärmen kann, und er eine Leitung für erwärmten Brennstoff (84) aufweist, die konfiguriert ist, um den Brennstoff (F), der durch den Wärmetauscher (66c) erwärmt wurde, zu der Brennkammer (12) zu leiten.

8. Das Gasturbinen-Kühlsystem (40c) gemäß Anspruch 5 oder 6, wobei der Wärmetauscher (66c) den Brennstoff (F) durch Austausch von Wärme zwischen dem Brennstoff (F), der der Brennkammer (12) der Gasturbine (10) zugeführt wird, und der komprimierten Luft (CA), die durch die Luftextraktionsleitung (41c) passiert, erwärmen kann, und
der Vorkühler (72c) den Brennstoff (F) unter Verwendung der Wärme der komprimierten Luft (CA), die durch die Luftextraktionsleitung (41c) passiert, erwärmen kann, und aufweist:
eine Leitung für erwärmten Brennstoff (84), die konfiguriert ist, um den erwärmten Brennstoff (F) zu der Brennkammer (12) zu leiten, und
eine Brennstoff-Umschaltvorrichtung (85c), die konfiguriert ist, um den Brennstoff (F) zu dem Wärmetauscher (66c) in dem ersten Zustand zu leiten und um den Brennstoff (F) zu dem Vorkühler (72c) in dem zweiten Zustand zu leiten.

9. Das Gasturbinen-Kühlsystem (40c) gemäß Anspruch 8, wobei die Brennstoff-Umschaltvorrichtung (85c) konfiguriert ist, um den Brennstoff (F), der durch den Wärmetauscher (66c) erwärmt wurde, zu der Leitung für erwärmten Brennstoff (84) in dem ersten Zustand zu leiten und um den Brennstoff (F), der durch den Vorkühler (72c) erwärmt wurde, zu der Leitung für erwärmten Brennstoff (84) in dem zweiten Zustand zu leiten.

10. Das Gasturbinen-Kühlsystem (40;40c) gemäß einem der Ansprüche 1, 2, 5 und 6, wobei die Kühlvorrichtung (60;60c) den Brennstoff (F) durch Austausch von Wärme zwischen dem Brennstoff (F), der der Brennkammer (12) der Gasturbine (10) zugeführt wird, und der komprimierten Luft (CA), die durch die Luftextraktionsleitung (41;41c) passiert, erwärmen kann, und sie eine Leitung für erwärmten Brennstoff (84;84a) aufweist, die konfiguriert ist, um den Brennstoff (F), der durch die Kühlvorrichtung (60;60c) erwärmt wurde, zu der Brennkammer (12) zu leiten.

11. Das Gasturbinen-Kühlsystem (40;40c) gemäß einem der Ansprüche 1 bis 10, wobei jede einer Vielzahl von Gasturbinen (10) die Luftextraktionsleitung (41;41c) aufweist und jede der Vielzahl von Gasturbinen (10) die Kühlluftleitung (42;42c) aufweist, und
die Kühlvorrichtung (60,60c) konfiguriert ist, um die komprimierte Luft (CA) zu kühlen, während sie das Kreislaufmedium (CM), das in dem organischen Rankine-Kreisprozess (50) kondensiert wurde, unter Verwendung von Wärme der komprimierten Luft (CA), die durch die Vielzahl von Luftextraktionsleitungen (42;42c) passiert, erwärmt und verdampft.

12. Eine Gasturbinenanlage mit:
dem Gasturbinen-Kühlsystem (40;40c) gemäß einem der Ansprüche 1 bis 11, und
einer Gasturbine (10).

13. Die Gasturbinenanlage gemäß Anspruch 12, wobei der Hochtemperaturabschnitt zumindest einer von einem Element, dass die Brennkammer (12) der Gasturbine (10) bildet, Schaufeln (24) eines Rotors (22) in der Turbine (21), angetrieben durch das durch Verbrennung durch die Brennkammer (12) erzeugte Verbrennungsgas, einem Wellenabschnitt des Rotors (22) und Leitschaufeln (28) der Turbine (21) ist.

14. Ein Verfahren zum Kühlen eines Hochtemperaturabschnitts einer Gasturbine (10) mit:
einem organischen Rankine-Kreisausbetriebsprozess des wiederholten Zirkulierens eines Kreislaufmediums (CM) durch Kondensation und Verdampfung in einem Kreislauf mit einer Turbine (52) und Betreiben eines organischen Rankine-Kreisprozesses (50), in dem die Turbine (52) durch das verdampfte Kreislaufmedium (CM) angetrieben wird,
einem Luftextraktionsprozess des Extrahierens von komprimierter Luft (CA) von einem Kompressor (11) der Gasturbine (10),
einem Kühlprozess des Kühlens der komprimierten Luft (CA) während das Kreislaufmedium (CM), das in dem organischen Rankine-Kreisprozess (50) kondensiert wurde, unter Verwendung von Wärme der komprimierten Luft (CA), die in dem Luftextraktionsprozess extrahiert wurde, erwärmt und verdampft wird, und
einem Kühllufteinbringprozess des Leitens der komprimierten Luft (CA), die in dem Kühlprozess gekühlt wurde, zu dem Hochtemperaturabschnitt, der in Kontakt mit einem Verbrennungsgas in der Gasturbine (10) ist,
wobei der Kühlprozess aufweist:
einen ersten Wärmeaustauschprozess des Austauschens von Wärme zwischen der komprimierten Luft (CA), die in dem Luftextraktionsprozess extrahiert wurde, und einem Zwischenmedium (IM), um das Zwischenmedium (IM) zu erwärmen, während die komprimierte Luft (CA) gekühlt wird,
einen zweiten Wärmeaustauschprozess des Austauschens von Wärme zwischen dem Zwischenmedium (IM), das in dem ersten Wärmeaustauschprozess erwärmt wurde, und dem Kreislaufmedium (CM), das in dem organischen Rankine-Kreisprozess (50) kondensiert wurde, um das Zwischenmedium (IM) zu kühlen, während das Kreislaufmedium (CM) erwärmt und verdampft wird, und Verwenden des gekühlten Zwischenmediums (IM) für einen Wärmeaustausch mit der komprimierten Luft (CA) in dem ersten Wärmeaustauschprozess, und
einen vorläufigen Kühlprozess des Kühlens des Zwischenmediums (IM), und
wobei das Verfahren aufweist:
einen ersten Zustandsprozess des Verwendens des Zwischenmediums (IM), das in dem ersten Wärmeaustauschprozess erwärmt wurde, für einen Wärmeaustausch mit dem Kreislaufmedium (CM) in dem zweiten Wärmeaustauschprozess und Verwenden des Zwischenmediums (IM), das in dem zweiten Wärmeaustauschprozess verwendet wurde, für einen Wärmeaustausch mit der komprimierten Luft (CA) in dem ersten Wärmeaustauschprozess, und
einen zweiten Zustandsprozess des Kühlens des Zwischenmediums (IM), das in dem ersten Wärmeaustauschprozess erwärmt wurde, während des vorläufigen Kühlprozesses, und Verwenden des Zwischenmediums (IM), das in dem vorläufigen Kühlprozess gekühlt wurde, für einen Wärmeaustausch mit der komprimierten Luft (CA) in dem ersten Wärmeaustauschprozess.

15. Ein Verfahren zum Kühlen eines Hochtemperaturabschnitts einer Gasturbine (10) mit:
einem organischen Rankine-Kreisausbetriebsprozess des wiederholten Zirkulierens eines Kreislaufmediums (CM) durch Kondensation und Verdampfung in einem Kreislauf mit einer Turbine (52) und Betreiben eines organischen Rankine-Kreisprozesses (50), in dem die Turbine (52) durch das verdampfte Kreislaufmedium (CM) angetrieben wird,
einem Luftextraktionsprozess des Extrahierens von komprimierter Luft (CA) von einem Kompressor (11) der Gasturbine (10),
einem Kühlprozess des Kühlens der komprimierten Luft (CA) während das Kreislaufmedium (CM), das in dem organischen Rankine-Kreisprozess (50) kondensiert wurde, unter Verwendung von Wärme der komprimierten Luft (CA), die in dem Luftextraktionsprozess extrahiert wurde, erwärmt und verdampft wird, und
einem Kühllufteinbringprozess des Leitens der komprimierten Luft (CA), die in dem Kühlprozess gekühlt wurde, zu dem Hochtemperaturabschnitt, der in Kontakt mit einem Verbrennungsgas in der Gasturbine (10) ist,
wobei der Kühlprozess aufweist:
einen Wärmeaustauschprozess des Austauschens von Wärme zwischen der komprimierten Luft (CA), die in dem Luftextraktionsprozess extrahiert wurde, und dem Kreislaufmedium (CM), das in dem organischen Rankine-Kreisprozess (50) kondensiert wurde, um das Kreislaufmedium (CM) zu erwärmen und zu verdampfen, während die komprimierte Luft (CA) gekühlt wird, und
einen vorläufigen Kühlprozess des Kühlens der komprimierten Luft (CA), und
wobei das Verfahren aufweist:
einen ersten Zustandsprozess des Verwendens der komprimierten Luft (CA), die in dem Luftextraktionsprozess extrahiert wurde, für einen Wärmeaustausch mit dem Kreislaufmedium (CM) in dem Wärmeaustauschprozess, sodass die komprimierte Luft (CA), die in dem Wärmeaustauschprozess gekühlt wurde, zu komprimierter Luft (CA) wird, die zu dem Hochtemperaturabschnitt in dem Kühllufteinbringprozess geleitet wird, und
einen zweiten Zustandsprozess des Kühlens der komprimierten Luft (CA), die in dem Luftextraktionsprozess extrahiert wurde, während des vorläufigen Kühlprozesses, sodass die komprimierte Luft (CA), die in dem vorläufigen Kühlprozess gekühlt wurde, zu komprimierter Luft (CA) wird, die zu dem Hochtemperaturabschnitt in dem Kühllufteinbringprozess geleitet wird.

16. Das Verfahren zum Kühlen des Hochtemperaturabschnitts der Gasturbine (10) gemäß Anspruch 14 oder 15, wobei der Kühlprozess einen Brennstofferwärmungsprozess des Erwärmens eines Brennstoffs (F) durch Austausch von Wärme zwischen dem Brennstoff (F), der der Brennkammer (12) der Gasturbine (10) zugeführt wird, und der komprimierten Luft (CA), die in dem Luftextraktionsprozess extrahiert wurde, aufweist, und
das Verfahren einen Einbringprozess für erwärmten Brennstoff aufweist, der konfiguriert ist, um den Brennstoff (F), der in dem Brennstofferwärmungsprozess erwärmt wurde, zu der Brennkammer (12) zu leiten.

## Revendications

1. Système (40) de refroidissement d'une turbine à gaz, configuré pour refroidir une partie à haute température en contact avec un gaz brûlé d'une turbine (10) à gaz, en utilisant de l'air (CA) comprimé extrait d'un compresseur (11) de la turbine (10) à gaz, le système (40) de refroidissement d'une turbine à gaz comprenant :
un cycle (50) organique de Rankine, configuré pour faire circuler de manière répétée un fluide (CM) de cycle par une condensation et une évaporation dans un cycle incluant une turbine (52) et pour entraîner la turbine (52) en utilisant le fluide (CM) de cycle évaporé;
une ligne (41) d'extraction d'air, configurée pour extraire l'air (CA) comprimé du compresseur (11);
une installation (60) de refroidissement, configurée pour refroidir l'air (CA) comprimé tout en chauffant et en évaporant le fluide (CM) de cycle condensé dans le cycle (50) organique de Rankine en utilisant de la chaleur de l'air (CA) comprimé passant dans la ligne (41) d'extraction d'air et
une ligne (42) d'air de refroidissement, configurée pour conduire l'air (CA) comprimé refroidi par l'installation (60) de refroidissement à la partie de haute température,
dans lequel l'installation (60) de refroidissement a :
une installation (61) d'échange de chaleur de type indirect, configurée pour échanger de la chaleur entre l'air (CA) comprimé passant dans la ligne (41) d'extraction d'air et le fluide (CM) de cycle condensé dans le cycle (50) organique de Rankine, par l'intermédiaire d'un fluide (IM) intermédiaire, l'installation (61) d'échange de chaleur de type indirect ayant :
un premier échangeur de chaleur (62; 62a), configuré pour échanger de la chaleur entre l'air (CA) comprimé passant dans la ligne (41) d'extraction d'air et le fluide (IM) intermédiaire pour chauffer le fluide (IM) intermédiaire tout en refroidissant l'air (CA) comprimé et
un deuxième échangeur de chaleur (66; 66a), configuré pour échanger de la chaleur entre le fluide (IM) intermédiaire chauffé par le premier échangeur de chaleur (62; 62a) et le fluide (CM) de cycle condensé dans le cycle (50) organique de Rankine pour refroidir le fluide (IM) intermédiaire et pour retourner le fluide (IM) intermédiaire au premier échangeur de chaleur (62; 62a) tout en chauffant et en évaporant le fluide (CM) de cycle;
un refroidisseur (72; 72a) préliminaire, configuré pour refroidir le fluide (IM) intermédiaire et
un dispositif (80) de commutation de fluide intermédiaire, configuré pour passer entre un premier état, dans lequel le fluide (IM) intermédiaire chauffé par le premier échangeur de chaleur (62; 62a) est conduit au deuxième échangeur de chaleur (66; 66a), et un second état, dans lequel le fluide (IM) intermédiaire chauffé par le premier échangeur de chaleur (62; 62a) est conduit au refroidisseur (72; 72a) préliminaire.

2. Système (40) de refroidissement d'une turbine à gaz suivant la revendication 1, dans lequel le dispositif (80) de commutation de fluide intermédiaire est configuré pour conduire le fluide (IM) intermédiaire refroidi par le deuxième échangeur de chaleur (66; 66a) au premier échangeur de chaleur (62; 62a) dans le premier état et pour conduire le fluide (IM) intermédiaire refroidi par le refroidisseur (72; 72a) préliminaire au premier échangeur de chaleur (62; 62a) dans le second état.

3. Système (40) de refroidissement d'une turbine à gaz suivant la revendication 1 ou 2, dans lequel le premier échangeur de chaleur (62a) est apte à chauffer un combustible (F) par échange de chaleur entre le combustible (F) envoyé à une chambre de combustion (12) de la turbine (10) à gaz et l'air (CA) comprimé passant dans la ligne (41) d'extraction d'air et
comprend une première ligne (84) pour du combustible chauffé, configurée pour conduire le combustible (F), chauffé par le premier échangeur de chaleur (62a), à la chambre de combustion (12).

4. Système (40) de refroidissement d'une turbine à gaz suivant la revendication 3, dans lequel le second échangeur de chaleur (66a) est apte à chauffer le combustible (F) par échange de chaleur entre le combustible (F) envoyé à la chambre de combustion (12) et le fluide (IM) intermédiaire chauffé par le premier échangeur de chaleur (62a) et comprend :
une deuxième ligne (89b) pour du combustible chauffé, configurée pour conduire le combustible (F), chauffé par le deuxième échangeur de chaleur (66a), à la chambre de combustion (12) et
un dispositif (85) de commutation de combustible, configuré pour passer entre un premier état, dans lequel le combustible (F) est conduit au premier échangeur de chaleur (62a), et un second état, dans lequel le combustible (F) est conduit au deuxième échangeur de chaleur (66a).

5. Système (40c) de refroidissement d'une turbine à gaz, configuré pour refroidir une partie à haute température en contact avec un gaz brûlé d'une turbine (10) à gaz, en utilisant de l'air (CA) comprimé extrait d'un compresseur (11) de la turbine (10) à gaz, le système (40c) de refroidissement d'une turbine à gaz comprenant :
un cycle (50) organique de Rankine, configuré pour faire circuler de manière répétée un fluide (CM) de cycle par une condensation et une évaporation dans un cycle incluant une turbine (52) et pour entraîner la turbine (52) en utilisant le fluide (CM) de cycle évaporé;
une ligne (41c) d'extraction d'air, configurée pour extraire l'air (CA) comprimé du compresseur (11);
une installation (60c) de refroidissement, configurée pour refroidir l'air (CA) comprimé tout en chauffant et en évaporant le fluide (CM) de cycle condensé dans le cycle (50) organique de Rankine en utilisant de la chaleur de l'air (CA) comprimé passant dans la ligne (41c) d'extraction d'air et
une ligne (42c) d'air de refroidissement, configurée pour conduire l'air (CA) comprimé refroidi par l'installation (60c) de refroidissement à la partie de haute température,
dans lequel l'installation (60c) de refroidissement a :
un échangeur de chaleur (66c), configuré pour échanger de la chaleur entre l'air (CA) comprimé passant dans la ligne (41C) d'extraction d'air et le fluide (CM) de cycle condensé dans le cycle (50) organique de Rankine pour chauffer et évaporer le fluide (CM) de cycle tout en refroidissant l'air (CA) comprimé;
un refroidisseur (72c) préliminaire, configuré pour refroidir l'air (CA) comprimé et
un dispositif (80c) de commutation d'air, configuré pour passer entre un premier état, dans lequel l'air (CA) comprimé passant dans la ligne (41c) d'extraction d'air est conduit à l'échangeur de chaleur (66c), et un second état, dans lequel l'air (CA) comprimé passant dans la ligne (41c) d'extraction d'air est conduit au refroidisseur (72c) préliminaire.

6. Système (40c) de refroidissement d'une turbine à gaz suivant la revendication 5, dans lequel le dispositif (80c) de commutation est configuré pour conduire l'air (CA) comprimé refroidi par l'échangeur de chaleur (66c) à la ligne (42c) pour de l'air de refroidissement dans le premier état et pour conduire l'air (CA) comprimé refroidi par le refroidisseur (72c) préliminaire dans la ligne (42c) pour de l'air de refroidissement dans le second état.

7. Système (40c) de refroidissement d'une turbine à gaz suivant la revendication 5 ou 6, dans lequel l'échangeur de chaleur (66c) est apte à chauffer un combustible (F) par échange de chaleur entre le combustible (F) envoyé à une chambre de combustion (12) de la turbine (10) à gaz et l'air (CA) comprimé passant dans la ligne (41c) d'extraction d'air et comprend une première ligne (84) pour du combustible chauffé, configurée pour conduire le combustible (F) chauffé par le premier échangeur de chaleur (66ca) à la chambre de combustion (12).

8. Système (40c) de refroidissement d'une turbine à gaz suivant la revendication 5 ou 6, dans lequel l'échangeur de chaleur (66c) est apte à chauffer le combustible (F) en échangeant de la chaleur entre le combustible (F) envoyé à la chambre de combustion (12) de la turbine (10) à gaz et l'air (CA) comprimé passant dans la ligne (41c) d'extraction d'air et
le refroidisseur (72c) préliminaire est apte à chauffer du combustible (F) en utilisant la chaleur de l'air (CA) comprimé passant dans la ligne (41c) d'extraction d'air et a :
une ligne (84) pour du combustible chauffé, configurée pour conduire le combustible (F) chauffé à la chambre de combustion (12) et
un dispositif (85c) de commutation de combustible, configuré pour conduire le combustible (F) à l'échangeur de chaleur (66c) dans le premier état et pour conduire le combustible (F) au refroidisseur (72c) préliminaire dans le second état.

9. Système (40c) de refroidissement d'une turbine à gaz suivant la revendication 8, dans lequel le dispositif (85c) de commutation de combustible est configuré pour conduire le combustible (F), chauffé par le premier échangeur de chaleur (66c), à la ligne (84) pour du combustible chauffé dans le premier état et pour conduire le combustible (F), chauffé par le refroidisseur (72c) préliminaire, à la ligne (84) pour du combustible chauffé dans le second état.

10. Système (40; 40c) de refroidissement d'une turbine à gaz suivant l'une quelconque des revendications 1, 2, 5 et 6, dans lequel l'installation (60; 60c) de refroidissement est apte à chauffer le combustible (F) par échange de chaleur entre le combustible (F) envoyé à la chambre de combustion (12) à la turbine (10) à gaz et l'air (CA) comprimé passant dans la ligne (41; 41c) d'extraction d'air et comprend une ligne (84; 84a) pour du combustible chauffé, configuré pour conduire le combustible (F), chauffé par l'installation (60; 60c) de refroidissement, à la chambre de combustion (12).

11. Système (40; 40c) de refroidissement d'une turbine à gaz suivant l'une quelconque des revendications 1 à 10, dans lequel chacune d'une pluralité de turbines (10) à gaz comprend la ligne (41; 41c) d'extraction d'air et chacune de la pluralité de turbines (10) à gaz comprend la ligne (42; 42c) pour de l'air de refroidissement et
l'installation (60, 60c) de refroidissement est configurée pour refroidir l'air (CA) comprimé tout en chauffant et en évaporant le fluide (CM) de cycle condensé dans le cycle (50) organique de Rankine en utilisant de la chaleur de l'air (CA) comprimé passant dans la pluralité de lignes (42; 42c) d'extraction d'air.

12. Usine à turbine à gaz, comprenant :
le système (40; 40c) de refroidissement d'une turbine à gaz suivant l'une quelconque des revendications 1 à 11 et
une turbine (10) à gaz.

13. Usine à turbine à gaz suivant la revendication 12, dans laquelle la partie à haute température est au moins l'un d'un élément, qui constitue la chambre de combustion (12) de la turbine (10) à gaz, des aubes (24) d'un rotor (22) de la turbine (21) entraîné par un gaz brûlé produit par combustion par la chambre de combustion (12), un tronçon d'arbre du rotor (22) et des aubes (28) de la turbine (21).

14. Procédé de refroidissement d'une partie à haute température d'une turbine (10) à gaz, comprenant :
un processus d'exécution d'un cycle organique de Rankine, dans lequel on fait circuler, de manière répétée, un fluide (CM) de cycle par une condensation et une évaporation dans un cycle incluant une turbine (52) et on fait fonctionner un cycle (50) organique de Rankine, dans lequel la turbine (52) est entraînée par le fluide (CM) de cycle évaporé;
un processus d'extraction d'air, dans lequel on extrait de l'air (CA) comprimé d'un compresseur (11) de la turbine (10) à gaz;
un processus de refroidissement, dans lequel on refroidit l'air (CA) comprimé tout en chauffant et en évaporant le fluide (CM) de cycle condensé dans le cycle (50) organique de Rankine, en utilisant de la chaleur de l'air (CA) comprimé extrait du processus d'extraction d'air et
un processus d'introduction d'air de refroidissement, dans lequel on conduit l'air (CA) comprimé refroidi dans le processus de refroidissement à la partie à haute température en contact avec un gaz brûlé dans la turbine (10) à gaz,
dans lequel le processus de refroidissement a :
un premier processus d'échange de chaleur, dans lequel on échange de la chaleur, entre l'air (CA) comprimé extrait dans le processus d'extraction d'air et un fluide (IM) intermédiaire pour chauffer le fluide (IM) intermédiaire tout en refroidissant l'air (CA) comprimé;
un deuxième processus d'échange de chaleur, dans lequel on échange de la chaleur entre le fluide (IM) intermédiaire chauffé dans le premier processus d'échange de chaleur et le fluide (CM) de cycle condensé dans le cycle (50) organique de Rankine, pour refroidir le fluide (IM) intermédiaire tout en chauffant et en évaporant le fluide (CM) de cycle, et dans lequel on utilise le fluide (IM) intermédiaire refroidi pour échanger de la chaleur avec l'air (CA) comprimé dans le premier processus d'échange de chaleur et
un processus de refroidissement préliminaire, dans lequel on refroidit le fluide (IM) intermédiaire et
dans lequel le procédé comprend :
un premier processus d'état, dans lequel on utilise le milieu (IM) intermédiaire chauffé dans le premier processus d'échange de chaleur, pour échanger de la chaleur avec le fluide (CM) de cycle dans le deuxième processus d'échange de chaleur, et dans lequel on utilise le fluide (IM) intermédiaire refroidi dans le deuxième processus d'échange de chaleur, pour échanger de la chaleur avec l'air (CA) comprimé dans le premier processus d'échange de chaleur et
un deuxième processus d'état, dans lequel on refroidit le fluide (IM) intermédiaire chauffé dans le premier processus d'échange de chaleur pendant le processus de refroidissement préliminaire, et dans lequel on utilise le fluide (IM) intermédiaire refroidi dans le processus de refroidissement préliminaire, pour échanger de la chaleur avec l'air (CA) comprimé dans le premier processus d'échange de chaleur.

15. Procédé de refroidissement d'une partie à haute température d'une turbine (10) à gaz, comprenant :
un processus d'exécution d'un cycle organique de Rankine, dans lequel on fait circuler, de manière répétée, un fluide (CM) de cycle par une condensation et une évaporation dans un cycle incluant une turbine (52) et on fait fonctionner un cycle (50) organique de Rankine, dans lequel la turbine (52) est entraînée par du fluide (52) de cycle évaporé;
un processus d'extraction d'air, dans lequel on extrait de l'air (CA) comprimé d'un compresseur (11) de la turbine (10) à gaz;
un processus de refroidissement, dans lequel on refroidit l'air (CA) comprimé tout en chauffant et en évaporant le fluide (CM) de cycle condensé dans le cycle (50) organique de Rankine, en utilisant de la chaleur de l'air (CA) comprimé extrait du processus d'extraction d'air et
un processus d'introduction d'air de refroidissement, dans lequel on conduit l'air (CA) comprimé refroidi dans le processus de refroidissement à la partie à haute température en contact avec un gaz brûlé dans la turbine (10) à gaz,
dans lequel le processus de refroidissement a :
un processus d'échange de chaleur, dans lequel de la chaleur est échangée entre l'air (CA) comprimé extrait dans le processus d'extraction d'air et le fluide (CM) de cycle condensé dans le cycle (50) organique de Rankine, pour chauffer et évaporer le fluide (CM) de cycle tout en refroidissant l'air (CA) comprimé et
un processus de refroidissement préliminaire, dans lequel l'air (CA) comprimé est refroidi et
dans lequel le procédé comprend :
un premier processus d'état dans lequel on utilise l'air (CA) comprimé extrait dans le processus d'extraction d'air pour un échange de chaleur avec le fluide (CM) de cycle dans le processus d'échange de chaleur, de manière à ce que l'air (CA) comprimé refroidi dans le processus d'échange de chaleur devienne de l'air (CA) comprimé conduit à la partie à haute température dans le processus d'introduction d'air de refroidissement et
un deuxième processus d'état, dans lequel on refroidit l'air (CA) comprimé extrait dans le processus d'extraction d'air pendant le processus de refroidissement préliminaire, de manière à ce que l'air (CA) comprimé refroidi dans le processus de refroidissement préliminaire devienne de l'air (CA) comprimé conduit à la partie à haute température dans le processus d'introduction d'air de refroidissement.

16. Procédé de refroidissement de la partie à haute température de la turbine (10) à gaz suivant la revendication 14 ou 15, dan lequel le processus de refroidissement a un processus de chauffage de combustible, dans lequel on chauffe un combustible (F) en échangeant de la chaleur entre le combustible (F), envoyé à la chambre de combustion (12) de la turbine (10) à gaz, et l'air (CA) comprimé extrait du processus d'extraction d'air et
le procédé comprend un processus d'introduction de combustible chauffé, configuré pour conduire le combustible (F) chauffé dans le processus de chauffage à la chambre de combustion (12).
